# EUROPEAN PATENT APPLICATION

(11) **EP 4 838 980 A1**
(43) Date of publication of application: **11.11.2026**
(21) Application number: 25744500.7
(22) Date of filing: 16.01.2025
(51) Int. Cl.: H04W 72/0446

(54) **SIGNAL TRANSMISSION METHOD AND RELATED APPARATUS**

(30) Priority: 23.01.2024 CN 202410094707
(71) Applicant: Huawei Technologies Co., Ltd., Shenzhen, Guangdong 518129 (CN)
(72) Inventor: PENG, Zhongchong, Shenzhen, Guangdong 518129 (CN); YAN, Mao, Shenzhen, Guangdong 518129 (CN); LIU, Fengwei, Shenzhen, Guangdong 518129 (CN)
(74) Representative: Huawei European IPR
(86) International application number: PCT/CN2025/072665
(87) International publication number: WO 2025/157058

(57) **Abstract**

A signal transmission method and a related apparatus are provided. The method includes: sending a plurality of SSBs; and sending a plurality of first-type signals, where the plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources. In this way, the slot occupancy of the first-type signals is reduced, and a slot originally used for transmitting the first-type signals can be reused for other signals, thereby helping improve downlink capacity. Similarly, the plurality of second-type signals occupy a same slot but different frequency domain resources. In this way, the slot occupancy of the second-type signals can be reduced, and a slot originally used for transmitting the second-type signals can be reused for other signals, thereby helping improve downlink capacity.

## Description

This application claims priority to Chinese Patent Application No. 202410094707.7, filed with the China National Intellectual Property Administration on January 23, 2024 and entitled "SIGNAL TRANSMISSION METHOD AND RELATED APPARATUS", which is incorporated herein by reference in its entirety.

### TECHNICAL FIELD

This application relates to the communication field, and in particular, to a signal transmission method and a related apparatus.

### BACKGROUND

A synchronization signal/physical broadcast channel block (synchronization signal/physical broadcast channel block, SS/PBCH) (referred to as an SSB) is the basis for implementing cell search. The synchronization signal includes a primary synchronization signal (primary synchronization signal, PSS) and a secondary synchronization signal (secondary synchronization signal, SSS). Together with the physical broadcast channel (physical broadcast channel, PBCH) signal, the PSS/SSS form the SSB. A master information block (master information block, MIB) is transmitted on the PBCH and is used for carrying scheduling information and the like for system information blocks (system information blocks, SIBs). For example, a terminal may obtain, based on the MIB carried on the PBCH, a time-frequency resource of a SIB1 corresponding to the SSB, to demodulate the SIB1.

Currently, the SIB1 occupies a relatively high proportion of slots, resulting in poor downlink capacity. The SIB1 includes first-type signals carried on the physical downlink control channel (physical downlink control channel, PDCCH) and second-type signals carried on the physical downlink shared channel (physical downlink shared channel, PDSCH). For example, in an initial access procedure, the SSB periodicity is 20 ms. Within this period, a network device may send SSBs by using eight beams. After sending the SSBs, the network device may send SIB1s after several slots, occupying a total of eight downlink slots. Therefore, the slot occupancy of the SIB1s is high within the 20 ms, resulting in low downlink capacity.

### SUMMARY

This application provides a signal transmission method and a related apparatus to improve downlink capacity.

According to a first aspect, this application provides a signal transmission method. The method may be performed by a communication apparatus. The communication apparatus may be a network device, or may be a component (for example, a chip or a chip system) configured in a network device, or may be a logic module or software that can implement all or some functions of the network device. This is not limited in this application.

For example, the method includes: sending a plurality of SSBs; and sending a plurality of first-type signals, where the plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources.

The first-type signals may be signals carried on a PDCCH, and the second-type signals may be signals carried on a PDSCH, for example, a system message. In actual practice, the first-type signal and the second-type signal may be generally considered as a whole (that is, a SIB), and the SIB may be, for example, a SIB1.

The plurality of first-type signals may be a plurality of first-type signals within one slot, for example, two first-type signals within one slot. Similarly, the plurality of second-type signals may be a plurality of second-type signals within one slot, for example, two second-type signals within one slot.

In addition, in this application, the plurality of first-type signals are in one-to-one correspondence with the plurality of second-type signals. In other words, when sending one first-type signal, the network device may send one second-type signal. The first-type signal may be carried on the PDCCH, and the second-type signal may be carried on the PDSCH. In this application, the plurality of first-type signals occupy a same slot, and the plurality of first-type signals occupy different frequency domain resources. In other words, the plurality of first-type signals may be frequency division multiplexed. When the plurality of first-type signals are frequency division multiplexed, the plurality of second-type signals are also frequency division multiplexed. In other words, that the plurality of first-type signals occupy the same slot, and the plurality of first-type signals occupy different frequency domain resources may alternatively be replaced with that the plurality of second-type signals occupy a same slot, and the plurality of second-type signals occupy different frequency domain resources.

It may be understood that a signal (that is, the first-type signal) carried on the PDCCH and a signal (that is, the second-type signal) carried on the PDSCH may occupy a same slot. In this case, that the plurality of first-type signals occupy the same slot, and the plurality of first-type signals occupy different frequency domain resources may alternatively be replaced with that a plurality of SIBs occupy a same slot (the SIB includes the first-type signal and the second-type signal), and the plurality of SIBs occupy different frequency domain resources. In addition, the plurality of SIBs may be a plurality of SIBs within one slot, for example, two SIBs within one slot.

The signal (that is, the first-type signal) carried on the PDCCH and the signal (that is, the second-type signal) carried on the PDSCH may also occupy different slots. In other words, the first-type signal and the second-type signal may cross slots. This is not limited in this application.

In the foregoing technical solution, after sending the plurality of SSBs, the network device may send the plurality of first-type signals corresponding to the plurality of SSBs. The plurality of first-type signals are used for scheduling the plurality of second-type signals. The plurality of first-type signals occupy the same slot but different frequency domain resources. In other words, the plurality of first-type signals may be frequency division multiplexed. In this way, slot occupancy can be reduced, and a slot originally used for transmitting the first-type signals can be reused for other signals, thereby helping improve downlink capacity. In addition, compared with transmission of one first-type signal within one slot, transmission of the plurality of first-type signals on different frequency domain resources within a same slot helps reduce a waste of frequency domain resources and improve utilization of the frequency domain resources. Similarly, the plurality of second-type signals occupy the same slot but different frequency domain resources. In this way, slot occupancy of the second-type signals can be reduced, and a slot originally used for transmitting the second-type signals can be reused for other signals, thereby helping improve the downlink capacity.

According to a second aspect, this application provides a signal transmission method. The method may be performed by a communication apparatus. The communication apparatus may be a terminal, or may be a component (for example, a chip or a chip system) configured in a terminal, or may be a logic module or software that can implement all or some functions of the terminal. This is not limited in this application.

For example, the method includes: receiving a first SSB, where the first SSB is one of a plurality of SSBs; and receiving a first signal, where the first signal is one of a plurality of first-type signals, the plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources. For related descriptions of the first-type signals and the second-type signals, refer to the first aspect. Details are not described herein again.

In the foregoing technical solution, the plurality of first-type signals used for scheduling the plurality of second-type signals occupy a same slot but different frequency domain resources. In other words, the plurality of first-type signals may be frequency division multiplexed. In this way, slot occupancy is reduced, and a slot originally used for transmitting the first-type signals can be reused for other signals, thereby helping improve downlink capacity. In addition, compared with transmission of one first-type signal within one slot, transmission of the plurality of first-type signals on different frequency domain resources within a same slot helps reduce a waste of frequency domain resources and improve utilization of the frequency domain resources. Similarly, the plurality of second-type signals occupy the same slot but different frequency domain resources. In this way, slot occupancy of the second-type signals can be reduced, and a slot originally used for transmitting the second-type signals can be reused for other signals, thereby helping improve the downlink capacity.

With reference to the first aspect and the second aspect, in some possible implementations, the first signal and the first SSB occupy different frequency domain resources. The foregoing first signal is one of the plurality of first-type signals, and the foregoing first SSB is an SSB corresponding to the first signal in the plurality of SSBs.

As described above, the plurality of first-type signals are in one-to-one correspondence with the plurality of second-type signals. Therefore, that the first signal and the first SSB occupy different frequency domain resources may alternatively be replaced with that a second signal and the first SSB occupy different frequency domain resources, where the second signal is a second-type signal corresponding to the first SSB in the plurality of second-type signals; or that a first SIB and the first SSB occupy different frequency domain resources, where the first SIB is a SIB corresponding to the first SSB in a plurality of SIBs.

The first SSB in the plurality of SSBs is used as an example. The first SSB and a first signal corresponding to the first SSB occupy different frequency domain resources. In other words, the first signal and the first SSB are frequency division multiplexed. In this way, the slot originally used for the transmission of the first signal may be reused for other signals, thereby reducing downlink slot occupancy of the first signal and the first SSB, and improving downlink capacity.

It should be noted that, in this application, the plurality of first-type signals and the plurality of SSBs may also occupy a same frequency domain resource. In other words, the plurality of SSBs and the plurality of first-type signals are transmitted in time division, and the plurality of first-type signals are frequency division multiplexed. To be specific, the plurality of first-type signals occupy the same slot but different frequency domain resources, but the plurality of first-type signals and the plurality of SSBs occupy different slots, and occupy the same frequency domain resource. In this way, a part of slots used for transmitting the first-type signals may also be reused for other signals, thereby improving the downlink capacity. For example, after sending the plurality of SSBs within a first slot, a network device sends the plurality of first-type signals within a second slot. The plurality of first-type signals occupy different frequency domain resources, and the second slot may be, for example, a next slot of the first slot.

Similarly, the plurality of second-type signals and the plurality of SSBs may also occupy a same frequency domain resource. In other words, the plurality of SSBs and the plurality of second-type signals are transmitted in time division, and the plurality of second-type signals are frequency division multiplexed. To be specific, the plurality of second-type signals occupy the same slot but different frequency domain resources, but the plurality of second-type signals and the plurality of SSBs occupy different slots, and occupy the same frequency domain resource. In this way, a part of slots used for transmitting the second-type signals may be reused for other signals, thereby improving the downlink capacity. For example, after sending the plurality of SSBs within the first slot, the network device sends the plurality of second-type signals within the second slot. The plurality of second-type signals occupy different frequency domain resources, and the second slot may be, for example, a next slot of the first slot.

With reference to the first aspect and the second aspect, in some possible implementations, the foregoing first signal and the foregoing first SSB occupy a same slot or different slots.

In this application, the first signal, the second signal, and the first SIB are in one-to-one correspondence. The first SIB includes the first signal and the second signal, the first signal is one of the plurality of first-type signals, and the second signal is a second-type signal corresponding to the first signal in the plurality of second-type signals. Therefore, in the following description, that the first signal and the first SSB occupy the same slot or different slots may be replaced with that the first SIB and the first SSB occupy a same slot or different slots; or that the second signal and the first SSB occupy a same slot or different slots.

When the first signal and the first SSB occupy different frequency domain resources, the first signal and the first SSB corresponding to the first signal may occupy a same slot. In other words, a slot in which the first signal is located is the same as a slot in which the first SSB is located. Alternatively, the first signal and the first SSB corresponding to the first signal may occupy different slots. In other words, the first signal and the first SSB occupy different slots, and occupy different frequency domain resources.

With reference to the first aspect and the second aspect, in some possible implementations, an offset of a frequency domain resource occupied by the first signal relative to a first frequency domain baseline is predefined or indicated by first indication information carried in the first SSB.

The offset of the frequency domain resource occupied by the first signal relative to the first frequency domain baseline may be referred to as a frequency domain offset corresponding to the first signal for short.

In a possible design, the network device indicates, to the terminal, the frequency domain offset corresponding to the first signal. In this way, the network device can flexibly configure the frequency domain offset corresponding to the first signal.

In another possible design, the frequency domain offset corresponding to the first signal is predefined. In this way, signaling overheads can be reduced.

Optionally, the foregoing first frequency domain baseline may be a frequency domain resource occupied by the first SSB. In other words, the frequency domain offset corresponding to the first signal may be an offset relative to the frequency domain resource occupied by the first SSB.

With reference to the first aspect and the second aspect, in some possible implementations, the first SSB carries second indication information. The second indication information indicates that the first SSB and the first signal are frequency division multiplexed, the frequency division multiplexing is one of a plurality of multiplexing modes, and the plurality of multiplexing modes include time division multiplexing and/or frequency division multiplexing.

The network device may indicate multiplexing modes of the first SSB and the first signal to the terminal. In this way, the multiplexing modes of the first SSB and the first signal can be flexibly adjusted. For example, when there is a large number of to-be-transmitted data, the network device may indicate the frequency division multiplexing of the first SSB and the first signal to the terminal, to reserve more time domain resources for transmission of a data signal; and when there is a small number of to-be-transmitted data, the network device may indicate time division multiplexing of the first SSB and the first signal to the terminal. This is not limited in this application.

With reference to the first aspect and the second aspect, in some possible implementations, a system frame number, a slot number, and a start symbol of the first signal are predefined or indicated by third indication information in the first SSB.

In a possible design, the network device indicates the system frame number, the slot number, and the start symbol of the first signal to the terminal. In this way, the network device can flexibly configure the system frame number, the slot number, and the start symbol of the first signal.

In another possible design, the system frame number, the slot number, and the start symbol of the first signal are predefined. In this way, the signaling overheads can be reduced.

With reference to the first aspect and the second aspect, in some possible implementations, the system frame number of the first signal is the same as a system frame number of the first SSB.

In this case, the slot number of the first signal is the same as a slot number of the first SSB, that is, the first signal and the first SSB occupy the same slot; or the slot number of the first signal = a slot number of the first SSB + n, that is, the first signal and the first SSB occupy different slots, where n is a positive integer and n ≤ a number of slots included in one system frame - 1.

That the slot number of the first signal = the slot number of the first SSB + n is merely an example, and should not constitute any limitation on this application. A simple transformation of the foregoing formula should also fall within the protection scope of this application. For example, the slot number of the first signal = the slot number of the first SSB - n.

In addition, in this application, a formula is used as an example of a relationship met by the system frame number, the slot number, and the start symbol of the first signal and the system frame number, the slot number, and a start symbol of the first SSB. However, this should not constitute any limitation on this application. For example, a form such as a table, an array, a queue, a container, a stack, a linear table, a pointer, a linked list, a tree, a graph, a structure, a class, a pile, a hash table, or a hash table may be used.

With reference to the first aspect and the second aspect, in some possible implementations, the system frame number of the first signal = the system frame number of the first SSB + m, where m is a number of system frames included in one SSB periodicity. In other words, the first signal and the first SSB occupy different slots.

For example, assuming that one SSB periodicity is 20 ms, m=2.

When the system frame number of the first signal = the system frame number of the first SSB + m, the slot number of the first signal = a slot number corresponding to a 1^{st} SSB in a next SSB periodicity.

With reference to the first aspect and the second aspect, in some possible implementations, a demodulation reference signal (demodulation reference signal, DMRS) corresponding to the first signal is a first DMRS, a DMRS corresponding to the second signal is a second DMRS. The first DMRS and the second DMRS have a same port number, and the first DMRS and the second DMRS have a same precoding granularity. The first signal is one of the plurality of first-type signals, and the second signal is a second-type signal corresponding to the first signal in the plurality of second-type signals.

The DMRS corresponding to the first signal may be replaced with a DMRS corresponding to a PDCCH carrying the first signal, and the DMRS corresponding to the second signal may be replaced with a DMRS corresponding to a PDSCH carrying the second signal. The DMRS corresponding to the PDCCH carrying the first signal may be understood as that the DMRS may be used for demodulating the PDCCH, and the DMRS corresponding to the PDSCH carrying the second signal may be understood as that the DMRS may be used for demodulating the PDSCH.

The first DMRS and the second DMRS have the same port number, and the first DMRS and the second DMRS have the same precoding granularity. In this way, the first DMRS can also be used for demodulating the PDSCH, that is, resources used for PDSCH channel estimation are increased, thereby helping improve PDSCH estimation precision.

With reference to the first aspect and the second aspect, in some possible implementations, a DMRS corresponding to the first signal and a DMRS corresponding to the second signal are a same DMRS. A time domain resource occupied by the DMRS includes a first symbol and a second symbol. Frequency domain resources occupied by the DMRS on the first symbol and the second symbol are the same or different. The first signal is one of the plurality of first-type signals, and the second signal is a second-type signal corresponding to the first signal in the plurality of second-type signals.

The DMRS corresponding to the first signal may be replaced with a DMRS corresponding to a PDCCH carrying the first signal, and the DMRS corresponding to the second signal may be replaced with a DMRS corresponding to a PDSCH carrying the second signal. The DMRS corresponding to the PDCCH carrying the first signal may be understood as that the DMRS may be used for demodulating the PDCCH, and the DMRS corresponding to the PDSCH carrying the second signal may be understood as that the DMRS may be used for demodulating the PDSCH.

The foregoing DMRS is double-symbol, and the frequency domain resources occupied by the DMRS on the first symbol and the second symbol are the same. In this way, a location originally used for transmitting the DMRS corresponding to the first signal may be used for transmitting the first signal. In addition, the frequency domain resources occupied by the DMRS on the first symbol and the second symbol are the same. This is equivalent to that a DMRS used for channel estimation is transmitted for a plurality of times, helping improve channel estimation precision.

According to a third aspect, this application provides a communication apparatus, to implement the method according to the first aspect and any one of the possible implementations of the first aspect or the method according to the second aspect and any one of the possible implementations of the second aspect. The apparatus includes a corresponding module configured to perform the foregoing method. The module included in the apparatus may be implemented by software and/or hardware.

According to a fourth aspect, this application provides a communication apparatus. The apparatus includes a processor, and the processor may be configured to execute a computer program in a memory, to implement the method according to the first aspect and any one of the possible implementations of the first aspect or the method according to the second aspect and any one of the possible implementations of the second aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, a pin, or a communication interface of another type.

Optionally, the apparatus further includes the memory, and the processor is coupled to the memory. The memory is configured to store program instructions and data. The memory is coupled to the processor. When the processor executes the instructions stored in the memory, the methods described in the foregoing aspects can be implemented.

According to a fifth aspect, this application provides a communication apparatus. The communication apparatus includes a processor and a communication interface. The communication interface is configured to receive a signal from a communication apparatus other than the communication apparatus and transmit the signal to the processor, or send a signal from the processor to a communication apparatus other than the communication apparatus. The processor uses a logic circuit or executes code instructions to implement the signal transmission method according to the first aspect and any one of the possible implementations of the first aspect or to implement the signal transmission method according to the second aspect and any one of the possible implementations of the second aspect. For example, the communication interface may be a transceiver, a circuit, a bus, a module, a pin, or another type of communication interface.

Optionally, the apparatus further includes a memory, configured to store instructions and data. The memory may be coupled to the processor. When executing the instructions stored in the memory, the processor implements the signal transmission method according to the first aspect and any one of the possible implementations of the first aspect, or implements the signal transmission method according to the second aspect and any one of the possible implementations of the second aspect.

According to a sixth aspect, this application provides a communication apparatus. The communication apparatus includes a processor and a memory. The memory is configured to store instructions and data. When executing the instructions stored in the memory, the processor can implement the signal transmission method according to the first aspect and any one of the possible implementations of the first aspect, or implement the signal transmission method according to the second aspect and any one of the possible implementations of the second aspect.

Optionally, the apparatus further includes a communication interface. The communication interface is used by the apparatus to communicate with another communication apparatus. For example, the communication interface may be a transceiver, a circuit, a bus, a module, a pin, or another type of communication interface.

According to a seventh aspect, this application provides a computer-readable storage medium. The computer-readable storage medium stores a computer program or instructions. When the computer program or the instructions are executed, the method according to the first aspect and any one of the possible implementations of the first aspect is implemented, or the method according to the second aspect and any one of the possible implementations of the second aspect is implemented.

According to an eighth aspect, this application provides a computer program product. The computer program product includes instructions. When the instructions are run, the method according to the first aspect and any one of the possible implementations of the first aspect is implemented, or the method according to the second aspect and any one of the possible implementations of the second aspect is implemented.

According to a ninth aspect, this application provides a chip system. The chip system includes at least one processor, configured to support implementation of a function in the first aspect and any one of the possible implementations of the first aspect, or configured to support implementation of a function in the second aspect and any one of the possible implementations of the second aspect, for example, receiving or processing data in the foregoing method.

In a possible design, the chip system further includes a memory. The memory is configured to store program instructions and data, and the memory is located inside or outside the processor.

The chip system may include a chip, or may include a chip and another discrete component.

According to a tenth aspect, this application provides a communication system. The communication system includes a network device and a terminal. The network device is configured to implement the method according to the first aspect and any one of the possible implementations of the first aspect, and the terminal is configured to implement the method according to the second aspect and any one of the possible implementations of the second aspect.

It should be understood that the technical solutions of the third aspect to the tenth aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of an architecture of a communication system applicable to a signal transmission method according to this application;
FIG. 2 is a diagram of an access network device applicable to a signal transmission method according to this application;
FIG. 3 is a diagram of a format of a time-frequency resource used for transmitting an SSB according to an embodiment of this application;
FIG. 4 is a schematic flowchart of an initial access procedure according to an embodiment of this application;
FIG. 5a, FIG. 5b, and FIG. 5c each are a diagram of a DMRS according to an embodiment of this application;
FIG. 6a, FIG. 6b, and FIG. 6c each are a diagram of a multiplexing mode of an SSB and a SIB1 according to an embodiment of this application;
FIG. 7 is a diagram of slot occupancy of an SSB and slot occupancy of a SIB1 according to an embodiment of this application;
FIG. 8 is a schematic flowchart of a signal transmission method according to an embodiment of this application;
FIG. 9 is a diagram of multiplexing a SIB1 and an SSB according to an embodiment of this application;
FIG. 10A(a), FIG. 10A(b), FIG. 10A(c), and FIG. 10A(d) each are another diagram of multiplexing a SIB and an SSB according to an embodiment of this application;
FIG. 10B is still another diagram of multiplexing a SIB and an SSB according to an embodiment of this application;
FIG. 11 is a diagram of a start symbol of a first SSB according to an embodiment of this application;
FIG. 12a, FIG. 12b, FIG. 12c, and FIG. 12d each are a diagram of DMRSs according to an embodiment of this application;
FIG. 13a and FIG. 13b each are a diagram of component carrier switching for frequency division multiplexing according to an embodiment of this application;
FIG. 14 is a block diagram of a communication apparatus according to an embodiment of this application;
FIG. 15 is another block diagram of a communication apparatus according to an embodiment of this application;
FIG. 16 is a diagram of a structure of a communication apparatus according to an embodiment of this application; and
FIG. 17 is another diagram of a structure of a communication apparatus according to an embodiment of this application.

### DESCRIPTION OF EMBODIMENTS

The following describes technical solutions of this application with reference to accompanying drawings.

For ease of understanding the technical solutions provided in embodiments of this application, the following descriptions are first provided.

First, in embodiments of this application, the terms "include", "have", and any other variant thereof are intended to cover a non-exclusive inclusion. For example, an apparatus, a system, a product, or a device that includes a series of assemblies, modules, or units is not necessarily limited to those assemblies, modules, or units that are explicitly listed, but may include other assemblies, modules, or units that are not explicitly listed or are inherent to such an apparatus, a system, a product, or a device.

Second, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-sintered, or preconfigured. Alternatively, indicating information A may be performed by using information B and a preset rule.

Third, in this application, that information C is used for determining information D includes that the information D is determined based only on the information C, and also includes that the information D is determined based on the information C and other information. In addition, that the information C is used for determining the information D may further include an indirect determining case, for example, a case in which the information D is determined based on information E, and the information E is determined based on the information C.

Fourth, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fifth, in this application, prefix words such as "first" and "second" are merely used for distinguishing and describing different things belonging to a same name category, and are not intended to limit a sequence, a size, or a number of things. For example, "first indication information" and "second indication information" are merely different indication information, and have no time sequence relationship, magnitude relationship, or priority relationship.

Sixth, in this application, "sending" and "receiving" indicate signal transmission directions. For example, "sending information to a network device" may be understood as that a target end of the information is the network device, or may include direct sending through an air interface, or include indirect sending by another unit or module through an air interface. "Receiving information from a terminal" may be understood as that a source end of the information is the terminal, or may include direct receiving from the terminal through an air interface, or may include indirect receiving from the terminal from another unit or module through an air interface. "Sending" may alternatively be understood as "outputting" of a chip interface, and "receiving" may alternatively be understood as "inputting" of the chip interface.

In other words, sending and receiving may be performed between devices, for example, between a network device and a terminal; or may be performed inside a device, for example, sending or receiving between components, modules, chips, software modules, or hardware modules inside the device through a bus, a cable, or an interface.

Seventh, in this application, "when" and "if" mean that an apparatus may perform corresponding processing in an objective situation, and are not intended to limit time. The terms do not mean that the apparatus is required to have a determining action during implementation, and do not mean any other limitation.

Eighth, in this application, a word such as "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the word "example", "for example", "such as", or "like" is intended to present a relative concept in a specific manner.

Ninth, in this application, preconfiguring may be understood as presetting, predefining, defining, defining in advance, storing, prestoring, prenegotiating, prefabricating, prepositioning, or the like.

Tenth, correspondences enumerated in tables in this application may be configured, or may be predefined. Values of the information in the tables are merely examples, and other values may be configured. This is not limited in this application. When a correspondence between the information and each parameter is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

Eleventh, the technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) mobile communication system, or a new radio access technology (new radio access technology, NR). The 5G mobile communication system may include non-standalone (non-standalone, NSA) networking and/or standalone (standalone, SA) networking. The technical solutions provided in this application may be further applied to a future communication system, for example, a 6^{th} generation (6^{th} generation, 6G) mobile communication system. This is not limited in this application.

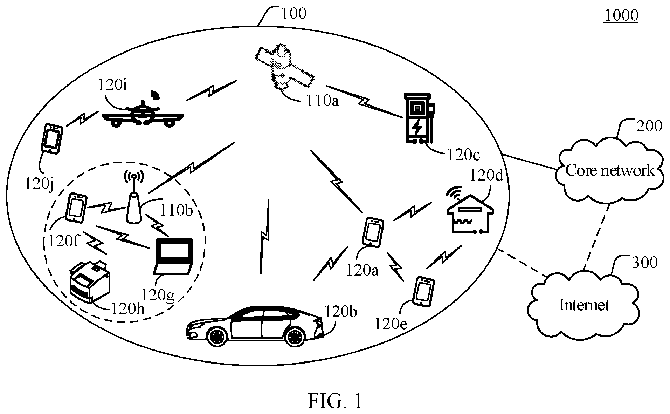

FIG. 1 is a diagram of an architecture of a communication system applicable to a signal transmission method according to this application. FIG. 1 is a diagram of a possible and nonlimiting system architecture.

As shown in FIG. 1, the communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to the 3^{rd} generation partnership project (3^{rd} generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 sometimes may also be referred to as an access network device, a RAN entity, an access node, a network device, or the like, and forms a part of a communication system, to help a terminal implement wireless access. A plurality of RAN nodes 110 in the communication system 1000 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For terminals 120j that access the RAN 100 via the network element 120i, the network element 120i is a base station, but for a base station 110a, the network element 120i is a terminal. Sometimes, the RAN node 110 and the terminal 120 are both referred to as communication apparatuses. For example, network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may include but is not limited to: a mobile phone (mobile phone), a pad (pad), a computer with a wireless transceiver function, a virtual reality (virtual reality, VR) device, an augmented reality (augmented reality, AR) device, a mixed reality (mixed reality, MR) device, an extended reality (extended reality, XR) device, a wireless terminal in industrial control (industrial control), a vehicle-mounted device, a wireless terminal in unmanned driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device, a video player, and a holographic projector.

In this application, the network device may be, for example, the RAN node 110 shown in FIG. 1, and the terminal may be, for example, the terminal 120 shown in FIG. 1. Types of the network device and the terminal are not specifically limited in this application.

In addition, the terminal and the network device may be hardware devices, or may be software functions running on dedicated hardware, or software functions running on general-purpose hardware, for example, virtualized functions instantiated on a platform (for example, a cloud platform), or may be entities including a dedicated or general-purpose hardware device and a software function. Specific forms of the terminal and the network device are not limited in this application.

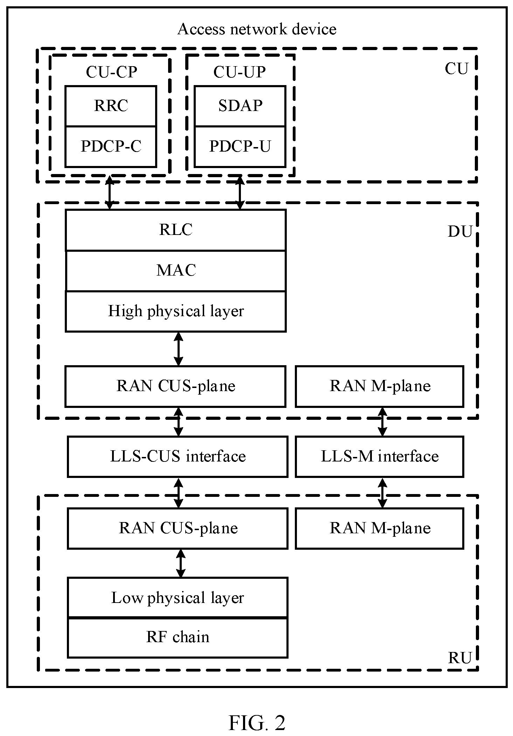

FIG. 2 is a diagram of an access network device applicable to a signal transmission method according to this application.

As shown in FIG. 2, the access network device includes one or more CUs, one or more DUs, and one or more RUs. For clarity, FIG. 2 shows only one CU, one DU, and one RU. The CU is configured to be connected to a core network and one or more DUs. Optionally, the CU may have some functions of the core network. The CU may include a CU-CP and a CU-UP.

The CU and the DU may be configured based on functions that are implemented by the CU and the DU and that are of protocol layers of a wireless network. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer); and the DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement functions of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane (control plane, C-plane) function of the CU, and the CU-UP is configured to implement a user plane (user plane, U-plane) function of the CU. For example, when the CU is configured to implement functions of the PDCP layer, the RRC layer, and the SDAP layer, the CU-CP is configured to implement functions of the RRC layer and a control plane (Control plane part of PDCP, PDCP-C) layer function of the PDCP layer, and the CU-UP is configured to implement functions of the SDAP layer and a user plane (user plane part of PDCP, PDCP-U) layer function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) network element in a 5G system. The AMF network element is configured to be responsible for mobility management in a mobile network, for example, position updating of a terminal device, network registration of the terminal device, and handover of the terminal device.

The CU-UP may interact with a network element that is in the core network and that is configured to implement a user plane function. The network element that is in the core network and that is configured to implement the user plane function, for example, a user plane function (user plane function, UPF) network element in the 5G system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, functions of the CU or the DU may be divided based on a service type or another system requirement, for example, based on latency. A function whose processing time needs to meet a low latency requirement is set on the DU, and a function whose processing time does not need to meet the latency requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function (corresponding to a high physical layer in FIG. 2) of the PHY layer, and the RU is configured to implement a lower-layer function of the PHY layer or implement the lower-layer function (corresponding to a low physical layer in FIG. 2) and a radio frequency (radio frequency, RF) function. The higher-layer function of the physical layer may include a part of functions of the physical layer, and the part of functions are closer to the MAC layer. The lower-layer function of the physical layer may include another part of functions of the physical layer, and the part of functions are closer to an intermediate radio frequency side.

The RU may be a TRP or a remote radio head (remote radio head, RRH) or another entity with a similar function. The low physical layer includes a part of physical layer processing, such as processing functions like fast Fourier transform (fast Fourier transform, FFT), inverse fast Fourier transformation (inverse fast Fourier transformation, IFFT), digital beamforming, and filtering. The RU communicates with one or more terminals through a radio link.

The DU and the RU may be co-sited, or may not be co-sited. The DU and the RU exchange control plane information and user plane information through a fronthaul link through a lower-layer split-control, user and synchronization (lower-layer split CUS-plane, LLS-CUS) interface. The LLS-CUS interface may include an LLS-C interface and an LLS-U interface that respectively provide a control plane and a user plane. In some examples, the control plane refers to real-time control between the DU and the RU. The DU and RU exchange management information through an LLS-M interface of the fronthaul link. A management (management, M)-plane (plane) refers to a non-real-time management operation between the DU and RU.

It should be understood that the structure of the access network device shown in FIG. 2 is merely an example, and should not constitute any limitation on this application. The access network device shown in FIG. 2 may be, for example, an O-RAN device, the CU may also be replaced with an O-CU, the DU may also be replaced with an O-DU, the RU may also be replaced with an O-RU, the CU-CP may also be replaced with an O-CU-CP, the CU-UP may also be replaced with an O-CU-UP, a RAN CUS-plane may also be replaced with an O-RAN CUS-plane, and a RAN M-plane may also be replaced with an O-RAN M-plane.

To better understand the method provided in this application, the following briefly describes terms in this application.
1. SSB: The SSB is the basis for implementing cell search. A synchronization signal includes a PSS and an SSS. Together with the PBCH signal, the PSS/SSS form the SSB. A MIB is transmitted on the PBCH and is used for carrying scheduling information and the like for a SIB. A terminal may obtain SIB information by reading MIB information. SIBs are mainly classified into a SIB1 to a SIB13. The SIB1 is mainly used for evaluating related information of whether a terminal is allowed to access a cell, and is used for carrying scheduling information of another system information block. For functions of the SIB 2 to the SIB13, refer to a related protocol. Details are not described herein.

In this application, the SSB corresponds to the SIB. It may be understood that the SSB includes the PBCH signal, and the MIB carried in the PBCH signal may indicate one or more of the following: whether a current cell can be accessed, whether the terminal can perform intrafrequency cell reselection, information required by the terminal to receive further system information (for example, the foregoing SIB1 or a SIB X), and the like. The terminal may determine positions/a position of control resources/a control resource of the SIB1 and/or the SIB X based on MIBs/a MIB in received SSBs/a received SSB, and search for the SIB1 and/or the SIB X on the corresponding control resources/the corresponding control resource, where a value of X is 2, 3, 4, ..., or 13.

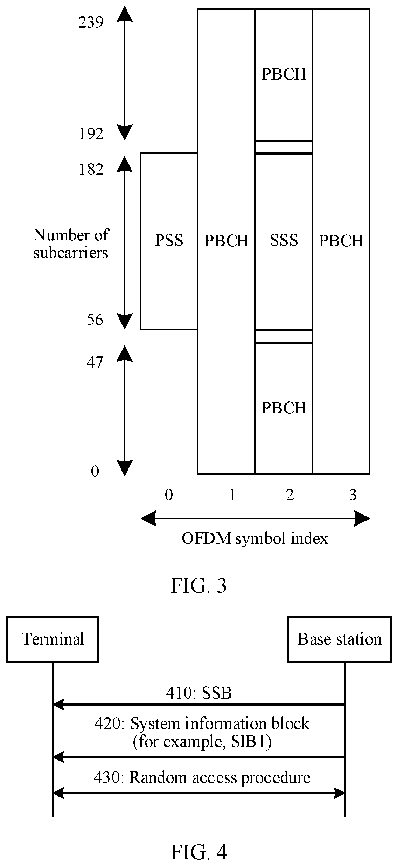

With reference to FIG. 3, the following describes in detail a format of a time-frequency resource used for transmitting of an SSB.

FIG. 3 is a diagram of a format of a time-frequency resource used for transmitting an SSB according to an embodiment of this application.

As shown in FIG. 3, the time domain resource used for transmitting the SSB is four orthogonal frequency division multiplexing (orthogonal frequency division multiplexing, OFDM) symbols (in this application, the OFDM symbol may be briefly referred to as a symbol). A 1^{st} OFDM symbol is used for carrying a PSS, and the PSS occupies 127 subcarriers in frequency domain. A 2^{nd} OFDM symbol and a 4^{th} OFDM symbol are used for carrying PBCH signals, and the PBCH signals each occupy 240 subcarriers in frequency domain. A 3^{rd} OFDM symbol is used for carrying an SSS (the SSS occupies 127 subcarriers in frequency domain) and a part of a PBCH signal (PBCH signals at two ends each occupy 48 subcarriers in frequency domain).
2. Resource block (resource block, RB) and resource block group (resource block group, RBG): The resource block may also be referred to as a physical resource block (physical resource block, PRB), and correspondingly, the resource block group may also be referred to as a physical resource block group. One resource block generally includes N resource elements (resource element, RE), and one resource element may also be referred to as one subcarrier, where a value of N may be, for example, 12. One resource block group includes one or more resource blocks.
3. Reference signal (reference signal, RS): The reference signal may be used for channel measurement, channel estimation, beam quality monitoring, or the like. Based on function division, the reference signal includes, for example, but is not limited to: a DMRS, a channel state information reference signal (channel state information reference signal, CSI-RS), a phase tracking reference signal (phase tracking reference signal, PTRS), and a channel sounding reference signal (sounding reference signal, SRS). The DMRS and the CSI-RS may be, for example, used for obtaining channel information, and the PTRS may be, for example, used for obtaining phase change information.
4. Physical downlink control channel (physical downlink control channel, PDCCH): The physical downlink control channel refers to a channel used for transmitting downlink control information (downlink control information, DCI). For example, the PDCCH may be used for transmitting resource allocation, uplink scheduling permission, power control, uplink retransmission information, and the like. The PDCCH occupies first {1, 2, 3} symbols of one slot in time domain, and may occupy full bandwidth in frequency domain, or configuration may be performed by using a parameter. This is not limited in this application.
5. Physical downlink shared channel (physical downlink shared channel, PDSCH): The physical downlink shared channel refers to a channel used for transmitting downlink user data. A resource occupied by the PDSCH in time domain may be indicated by a time domain resource allocation field in DCI (for example, a 1^{st} symbol and a number of consecutive symbols are indicated), and a resource occupied in frequency domain is indicated by a frequency domain resource allocation field in DCI. A frequency domain resource indicated by the frequency domain resource allocation field in the DCI may be at a granularity of an RBG or an RB. This is not limited in this application.

In this application, the SIB includes a first-type signal and a second-type signal. The first-type signal is a signal transmitted on the PDCCH, and the second-type signal is a signal transmitted on the PDSCH.

6. Control resource set (control resource set, CORESET) and search space (search space): The control resource set is a group of physical resources, including a plurality of RBs in frequency domain and 1, 2, or 3 OFDM symbols in time domain. One CORESET corresponds to one or more terminals. For example, a CORESET 1 corresponds to a terminal 1, a terminal 2, a terminal 3, and a terminal 4, and a CORESET 2 corresponds to the terminal 4, a terminal 5, a terminal 6, and a terminal 7. The CORESET 1 may be used for transmitting a signal carried on a PDCCH corresponding to the terminal 1, a signal carried on a PDCCH corresponding to the terminal 2, a signal carried on a PDCCH corresponding to the terminal 3, and a signal carried on a PDCCH corresponding to the terminal 4. The CORESET 2 may be used for transmitting the signal carried on the PDCCH corresponding to the terminal 4, a signal carried on a PDCCH corresponding to the terminal 5, a signal carried on a PDCCH corresponding to the terminal 6, and a signal carried on a PDCCH corresponding to the terminal 7.

The search space is an area of the CORESET, and the terminal may monitor the search space to detect a specific PDCCH (or DCI). One terminal has a search space on one CORESET, and a resource of the search space is less than or equal to a resource of the CORESET. One terminal may correspond to a plurality of CORESETs, and parameter sets (numerology) on the plurality of CORESETs may be the same or may be different. The parameter set includes, for example, a subcarrier spacing and a cyclic prefix (cyclic prefix, CP) length.

A CORESET 0 is a special CORESET, and the CORESET 0 is used for parsing a SIB1.

In this application, the CORESET 0 may indicate a length of a PDCCH time domain resource, a length of a frequency domain resource, an offset, and an SSB multiplexing mode. Search space 0 is the search space corresponding to the CORESET 0, and may be used for determining a system frame number, a slot, and an OFDM symbol position that may exist on the PDCCH. In addition, in the following, the CORESET 0 and the PDCCH may be replaced with each other. For example, a system frame number, a slot number, and a start symbol that are corresponding to a first signal (one of a plurality of first-type signals) may be understood as a system frame number, a slot number, and a start symbol that are corresponding to a PDCCH carrying the first signal, or a system frame number, a slot number, and a start symbol of the CORESET 0.

The following describes in detail main parameter configurations of the control resource set and the search space with reference to tables.

**Table 1**

| Parameter name | Function |
|---|---|
| Control resource set identifier (controlResourceSetId) | Identifies a corresponding CORESET configuration. |
| Frequency domain resource (frequencyDomainResources) | Indicates a frequency domain position of a control resource set. |
| Duration (duration) | Indicates a number of symbols occupied by the control resource set in time domain. |
| Control channel element (control channel element, CCE)-resource element group (resource element group, REG)-mapping relationship (cce-REG-MappingType) | Indicates a mapping relationship between a CCE and a REG. |
| Precoding granularity (precoderGranularity) | Indicates a configuration related to PDCCH precoding. |
| TCI state add list (tci-StatesPDCCH-ToAddList) | Used to configure a TCI state corresponding to a PDCCH (which may alternatively be understood as a beam direction used for receiving a PDCCH signal). |
| TCI state release list (tci-StatesPDCCH-ToReleaseList) | |
| Whether a corresponding TCI state is present in DCI (tci-PresentInDCI) | Indicates whether a field indicating beam information corresponding to a PDSCH is present in the DCI. |

Table 1 is main parameter configurations of the control resource set. One CCE includes six REGs, and one REG corresponds to one RB on one OFDM symbol. The REG represents a resource corresponding to one symbol in time domain and one RB in frequency domain. A resource that may be occupied by the PDCCH and a resource actually occupied by the PDCCH may be described by using the CCE.

Table 2 is main parameter configurations of the search space.

**Table 2**

| Parameter name | Function |
|---|---|
| Search space identifier (searchSpaceId) | Identifies a corresponding search space configuration. |
| Control resource set identifier (controlResourceSetId) | Indicates a control resource set bound to a search space. |
| Periodicity and offset (monitoringSlotPeriodicityAndOffset) | Indicates a periodicity of the search space and an offset within the periodicity. |
| Duration (duration) | Indicates a number of consecutive slots occupied by the search space in time domain within each periodicity. |
| Start symbol within a slot (monitoringSymbolsWithinSlot) | Indicates a start symbol of the search space within a slot. |
| Number of PDCCH candidates (nrofCandidates) | Indicates a number of PDCCH candidates (candidate). |
| Search space type (searchSpaceType) | Indicates a type of the search space and a type of DCI on which blind detection needs to be performed. |

A network device may schedule, by using DCI carried on a PDCCH, sending of uplink data and receiving of downlink data of a terminal. However, the terminal does not know an exact position of the PDCCH carrying the DCI. Therefore, the terminal performs blind detection in a search space in a control resource set. A PDCCH candidate is a position at which the PDCCH carrying the DCI may be present. To reduce a number of blind detections of the terminal, the network device may configure PDCCHs according to a predefined rule, and the terminal performs the blind detection according to the foregoing rule.

It should be noted that one control resource set may correspond to (or be bound to) a plurality of search spaces, but one search space can correspond to only one control resource set.

7. Initial access procedure: The initial access procedure is an important procedure in which a terminal connects to a network, and mainly includes PSS/SSS detection, PBCH and other system information decoding, and a physical random access channel (physical random access channel, PRACH) procedure (which may be briefly referred to as a random access procedure). The following describes the initial access procedure in detail with reference to FIG. 4.

FIG. 4 is a schematic flowchart of an initial access procedure according to an embodiment of this application.

In step 410, a base station sends an SSB. Correspondingly, a terminal receives the SSB.

The SSB is periodically sent by the base station. As mentioned above, the SSB includes a PBCH signal, and a MIB carried in the PBCH signal may indicate scheduling information of a SIB1, such as a search space 0 (search space zero) and a control resource set 0 (control resource set zero).

In this application, an SSB that indicates the SIB1 is referred to as a cell defining SSB (cell defining SSB, CD SSB), and an SSB that does not indicate the SIB1 is referred to as a non-cell defining SSB (non-cell defining SSB, NCD SSB).

After the terminal is powered on or needs to access a network again, the terminal may scan the SSB from the base station to perform downlink time and frequency synchronization. This process may be referred to as cell search.

In step 420, the base station sends a system information block (for example, the SIB1). Correspondingly, the terminal receives the system information block.

The base station sends the system information block in a broadcast manner. The foregoing system information block may be, for example, the SIB1. The SIB1 carries information required in a random access procedure, for example, a resource position of a PDCCH used for transmitting a message 2 (message 2, Msg 2) and a message 4 (message 4, Msg 4), and may be used by the terminal to complete the random access procedure.

In step 430, the terminal performs the random access procedure.

For example, the terminal selects a proper preamble (preamble) based on the SIB1, and sends the preamble (denoted as a message 1 (message 1, Msg 1)) to the base station. Correspondingly, the base station receives the preamble. After receiving the preamble, the base station sends a random access response (random access response, RAR) (denoted as a message 2) to the terminal. The message 2 may carry a timing advance (timing advance, TA), to indicate the terminal to perform uplink synchronization.

Further, after receiving the message 2, the terminal may send an RRC connection setup request message (RRCSetupRequest) (denoted as a message 3) on an uplink resource allocated by using the message 2. After receiving the message 3, the base station sends an RRC connection setup success message (denoted as a message 4).

8. DMRS corresponding to a PDCCH and DMRS corresponding to a PDSCH: In NR, precoding of a PDCCH and precoding of a PDSCH are independent of each other (for example, a precoding granularity of the PDCCH is 6 (in REGs or RBs), and a precoding granularity of the PDSCH is 2). Therefore, the DMRS corresponding to the PDCCH (denoted as a PDCCH DMRS) and the DMRS corresponding to the PDSCH (denoted as a PDSCH DMRS) are also independently configured, so as to facilitate independent demodulation.

The precoding granularity may be understood as a number of RBs or REGs that are used as a group for precoding.

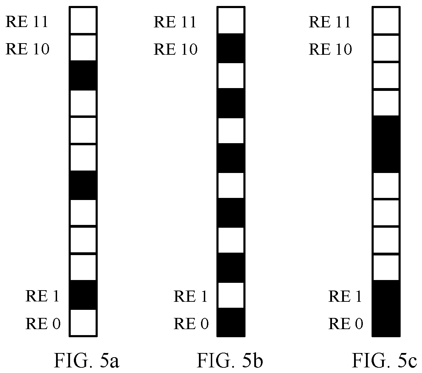

A network device may configure a frequency domain resource for the DMRS, that is, a DMRS type (DMRS type). The DMRS type may also be referred to as a DMRS configuration type (DMRS configuration type). The following describes in detail a PDCCH DMRS type and a PDSCH DMRS type with reference to FIG. 5a, FIG. 5b, and FIG. 5c.

FIG. 5a, FIG. 5b, and FIG. 5c each are a diagram of a DMRS according to an embodiment of this application.

As shown in FIG. 5a, PDCCH DMRSs have a frequency domain density of 1/4, and start from an RE 1 in frequency domain. In other words, the PDCCH DMRSs start from a 2^{nd} RE in a REG, that is, a start RE is the 2^{nd} RE in the REG.

As shown in FIG. 5b, a type of a PDSCH DMRS corresponding to a message (for example, a SIB1, a paging message, a message 2, a message 4, and other system information) in a downlink broadcast/multicast/initial access procedure is mainly a DMRS configuration type 1, a frequency domain density is 1/2, and a start RE is an RE 0, that is, the start RE is a 1^{st} RE in a REG.

As shown in FIG. 5c, for a downlink message (for example, a message 2, a message 4, a paging message, other system information, or an RRC configuration message) other than a SIB1, a PDSCH DMRS may be configured into a DMRS configuration type 2, and a start RE is an RE 0, that is, the start RE is a 1^{st} RE in a REG.

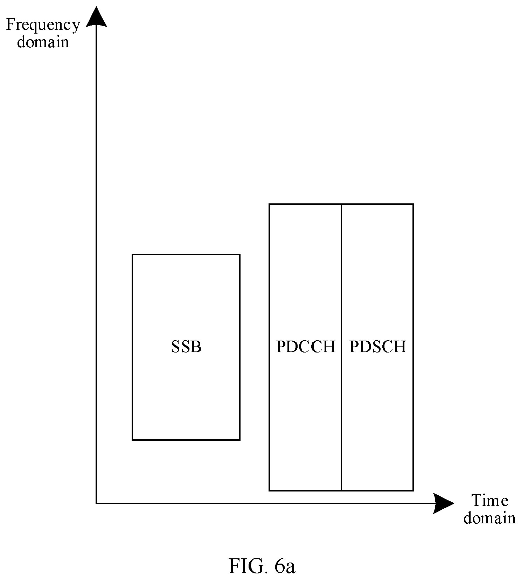

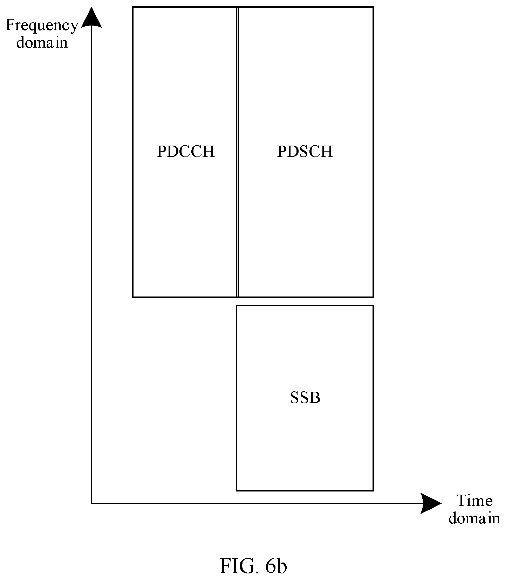

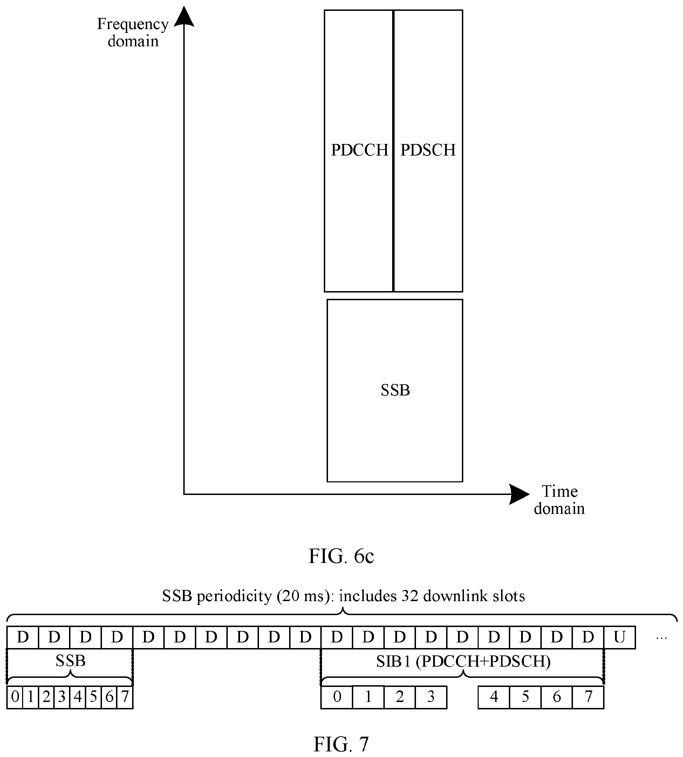

It should be understood that, in this application, for ease of description, indexes or identifiers may be consecutively numbered from 1. For example, one REG includes 12 REs, and the 12 REs include a 1^{st} RE to a 12^{th} RE. Certainly, a specific implementation is not limited thereto. For example, indexes or identifiers may be consecutively numbered from 0. In this case, the 12 REs include a 0^{th} RE to an 11^{th} RE.
9. Component carrier (component carrier, CC): Each carrier involved in carrier aggregation is called a CC. Among all component carriers, a component carrier that carries signaling transmission and manages other component carriers is referred to as a primary component carrier (primary component carrier, PCC), and a cell corresponding to the primary component carrier is referred to as a primary cell (primary cell, PCell). The other component carriers are referred to as secondary component carriers (secondary component carrier, SCC), and a cell corresponding to the secondary component carrier is referred to as a secondary cell (secondary cell, SCell).
10. Multiplexing modes of an SSB and a SIB (using a SIB1 as an example): The multiplexing modes include time division multiplexing, frequency division multiplexing, and the time division multiplexing and the frequency division multiplexing. The following describes in detail the multiplexing modes of the SSB and the SIB1 with reference to FIG. 6a, FIG. 6b, and FIG. 6c.

FIG. 6a, FIG. 6b, and FIG. 6c each are a diagram of a multiplexing mode of an SSB and a SIB1 according to an embodiment of this application. The SIB1 includes a first signal carried on a PDCCH and a second signal carried on a PDSCH, and the first signal corresponds to the second signal.

In addition, in FIG. 6a, FIG. 6b, and FIG. 6c, a SIB1-PDCCH (the PDCCH carrying the first signal) and a SIB1-PDSCH (the PDSCH carrying the second signal) occupy a same frequency domain resource.

As shown in FIG. 6a, a multiplexing mode of time division multiplexing is used for the SSB and the SIB1. In other words, the SSB and the SIB1 are transmitted in time division. In this case, few slots can be used for transmitting other signals such as a data signal, resulting in poor downlink capacity.

As shown in FIG. 6b, a multiplexing mode of frequency division multiplexing is used for the SSB and the second signal. In other words, the SSB and the second signal occupy different frequency domain resources, and the SSB and the second signal occupy a same slot. As shown in FIG. 6c, a multiplexing mode of frequency division multiplexing is used for the SSB and the SIB1. The SIB1 includes the first signal and the second signal. In other words, the SSB and the SIB1 occupy different frequency domain resources, and the SSB and the SIB1 occupy a same slot.

The following describes in detail slot occupancy of the SSB and slot occupancy of the SIB1 with reference to FIG. 7. In this application, the SIB1 includes the first signal and the second signal scheduled by using the first signal. Details are not described below again.

FIG. 7 is a diagram of slot occupancy of an SSB and slot occupancy of a SIB1 according to an embodiment of this application.

As shown in FIG. 7, in an initial access procedure, an SSB periodicity is 20 ms. Within the 20 ms, a network device may send SSBs by using eight beams. For example, the SSBs of the eight beams are respectively identified by an SSB #0 to an SSB #7, and a total of four downlink slots are occupied. After sending the SSBs by using the eight beams, the network device may send SIB1s (for example, a SIB1 #0 to a SIB1 #7 in the figure) after several slots, and a total of eight downlink slots are occupied by the SIB1s. It can be learned that, only one SIB1 is transmitted within one slot, or only one first-type signal is transmitted within one slot, or only one second-type signal is transmitted within one slot. Therefore, within 32 downlink slots within the 20 ms, slot occupancy of the SIB1s is 8/32 = 25%. The slot occupancy is high (or slot occupancy of first-type signals is high, or slot occupancy of second-type signals is high), resulting in low downlink capacity.

To resolve the foregoing problem, this application provides a signal transmission method. After sending a plurality of SSBs, the network device may send a plurality of first-type signals corresponding to the plurality of SSBs. The plurality of first-type signals are used for scheduling a plurality of second-type signals. The plurality of first-type signals occupy a same slot but different frequency domain resources. In other words, a multiplexing mode of frequency division multiplexing may be used for the plurality of first-type signals. In this way, slot occupancy is reduced, and a slot originally used for transmitting the first-type signals can be reused for other signals, thereby helping improve downlink capacity.

Similarly, the plurality of second-type signals occupy a same slot but different frequency domain resources. In this way, slot occupancy of the second-type signals can be reduced, and a slot originally used for transmitting the second-type signals can be reused for other signals, thereby helping improve downlink capacity.

The following describes in detail the signal transmission method provided in this application with reference to accompanying drawings.

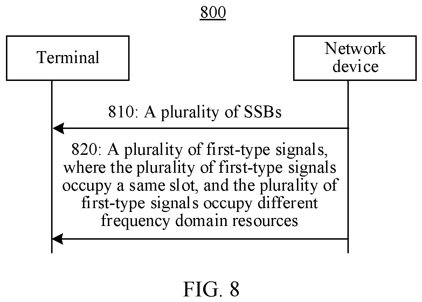

FIG. 8 is a schematic flowchart of a signal transmission method 800 according to an embodiment of this application. In FIG. 8, the method is described by using interaction between a network device and a terminal merely as an example, which should not constitute any limitation on this application. The network device in FIG. 8 may alternatively be replaced with a component (for example, a chip, a chip system, or a processor) configured in the network device, or a logic module, software, or the like that can implement all or some functions of the network device. The terminal may be replaced with a component (for example, a chip, a chip system, or a processor) configured in the terminal, or a logic module, software, or the like that can implement all or some functions of the terminal.

It should be understood that the method provided in this application is applicable to a frequency range (frequency range, FR) 1, or is applicable to an FR 2. The FR 1 refers to 450 megahertz (megahertz, MHz) to 6,000 MHz, and the FR 2 refers to 24.25 gigahertz (gigahertz, GHz) to 52.6 GHz. An applicable frequency range is not limited in this application.

The method 800 shown in FIG. 8 includes step 810 and step 820. The following describes in detail steps in the method 800.

In step 810, the network device sends a plurality of SSBs.

The plurality of SSBs may be, for example, SSBs sent within one slot. For example, a number of the plurality of SSBs is 2, that is, the network device sends two SSBs within one slot.

For example, in a RAN in which a CU, a DU, and an RU are deployed, a specific implementation of step 810 may be: A CU-CP sends the plurality of SSBs to the terminal via the DU and the RU; and in an ORAN, a specific implementation of step 810 may be: An O-CU-CP sends the plurality of SSBs to the terminal via an O-DU and an O-RU.

It may be understood that the network device sends the plurality of SSBs, and correspondingly, the terminal may receive at least one of the plurality of SSBs. For example, the terminal receives a first SSB, where the first SSB is one of the plurality of SSBs.

In step 820, the network device sends a plurality of first-type signals, where the plurality of first-type signals occupy a same slot, and the plurality of first-type signals occupy different frequency domain resources.

The plurality of first-type signals are in one-to-one correspondence with the plurality of SSBs, the plurality of first-type signals are used for scheduling a plurality of second-type signals, and the plurality of first-type signals are in one-to-one correspondence with the plurality of second-type signals. The first-type signal may be, for example, a signal carried on a PDCCH, that is, the plurality of first-type signals that are carried on the PDCCH and that are used for scheduling the plurality of second-type signals occupy a same slot but different frequency domain resources.

The plurality of first-type signals may be a plurality of first-type signals within one slot, for example, two first-type signals within one slot. The network device sends the two first-type signals within the same slot, and the two first-type signals occupy different frequency domain resources. Similarly, the plurality of second-type signals may be a plurality of second-type signals within one slot, for example, two second-type signals within one slot. The network device sends the two second-type signals within the same slot, and the two second-type signals occupy different frequency domain resources.

The second-type signal may be a signal carried on a PDSCH, for example, a system message. In actual practice, the first-type signal and the second-type signal may be generally considered as a whole (that is, a SIB), and the SIB may be, for example, a SIB1.

In addition, in this application, the plurality of first-type signals are in one-to-one correspondence with the plurality of second-type signals. In other words, when sending one first-type signal, the network device may send one second-type signal. The first-type signal may be carried on the PDCCH, and the second-type signal may be carried on the PDSCH. In this application, the plurality of first-type signals occupy the same slot, and the plurality of first-type signals occupy different frequency domain resources. In other words, the plurality of first-type signals may be frequency division multiplexed. When the plurality of first-type signals are frequency division multiplexed, the plurality of second-type signals are also frequency division multiplexed. In other words, that the plurality of first-type signals occupy the same slot, and the plurality of first-type signals occupy different frequency domain resources may alternatively be replaced with that the plurality of second-type signals occupy a same slot, and the plurality of second-type signals occupy different frequency domain resources.

It may be understood that a signal (that is, the first-type signal) carried on the PDCCH and a signal (that is, the second-type signal) carried on the PDSCH may occupy a same slot. In this case, that the plurality of first-type signals occupy the same slot, and the plurality of first-type signals occupy different frequency domain resources may alternatively be replaced with that a plurality of SIBs occupy a same slot, and the plurality of SIBs occupy different frequency domain resources.

It may be understood that a signal (that is, the first-type signal) carried on the PDCCH and a signal (that is, a SIB) carried on the PDSCH may also occupy different slots. In other words, the first-type signal and the SIB may cross slots. This is not limited in this application.

For example, in the RAN in which the CU, the DU, and the RU are deployed, a specific implementation of step 820 may be: The CU-CP sends the plurality of first-type signals to the terminal via the DU and the RU; and in the ORAN, a specific implementation of step 820 may be: The O-CU-CP sends the plurality of first-type signals to the terminal via the O-DU and the O-RU.

It may be understood that the network device sends the plurality of first-type signals, and correspondingly, the terminal may receive at least one of the plurality of first-type signals. For example, the terminal receives a first signal, where the first signal is one of the plurality of first-type signals.

It should be noted that in this application, there are at least two SIBs in a same slot, and information carried in the SIBs is the same, and is related indication information of a same cell. Therefore, after detecting and demodulating a 1^{st} signal used for scheduling a SIB, the terminal may obtain two SIBs at the same time. Assuming that the SIBs occupy a same time domain resource and have a same frequency domain offset absolute value, the terminal may demodulate only a SIB with a larger received signal to noise ratio (signal to noise ratio, SNR). In this way, the terminal can quickly demodulate the SIB, avoiding consuming extra time to demodulate a plurality of SIBs carrying same information.

Optionally, the plurality of first-type signals occupy the same slot but different frequency domain resources. In a possible design, the plurality of first-type signals and the plurality of SSBs may occupy a same frequency domain resource. In other words, the plurality of SSBs and the plurality of first-type signals are transmitted in time division, and the plurality of first-type signals are frequency division multiplexed. That is, the plurality of first-type signals occupy the same slot but different frequency domain resources. For example, after sending the plurality of SSBs within a first slot, the network device sends the plurality of first-type signals within a second slot. The plurality of first-type signals occupy different frequency domain resources, and the second slot may be, for example, a next slot of the first slot.

Similarly, the plurality of second-type signals and the plurality of SSBs may also occupy a same frequency domain resource. In other words, the plurality of SSBs and the plurality of second-type signals are transmitted in time division, and the plurality of second-type signals are frequency division multiplexed. To be specific, the plurality of second-type signals occupy the same slot but different frequency domain resources, but the plurality of second-type signals and the plurality of SSBs occupy different slots, and occupy the same frequency domain resource. In this way, a part of slots used for transmitting the second-type signals may be reused for other signals, thereby improving the downlink capacity. For example, after sending the plurality of SSBs within the first slot, the network device sends the plurality of second-type signals within the second slot. The plurality of second-type signals occupy different frequency domain resources, and the second slot may be, for example, a next slot of the first slot.

The signal (that is, the first-type signal) carried on the PDCCH and the signal (that is, the second-type signal) carried on the PDSCH may occupy the same slot. In this case, the plurality of SIBs and the plurality of SSBs may also occupy a same frequency domain resource. In other words, the plurality of SSBs and the plurality of SIBs are transmitted in time division, and the plurality of SIBs are frequency division multiplexed. To be specific, the plurality of SIBs occupy the same slot but different frequency domain resources, but the plurality of SIBs and the plurality of SSBs occupy different slots, and occupy the same frequency domain resource.

In another possible design, the plurality of first-type signals and the plurality of SSBs may occupy different frequency domain resources. In other words, the plurality of SSBs and the plurality of first-type signals are transmitted in frequency division. To be specific, within a same slot, the network device sends the plurality of SSBs and the plurality of first-type signals, the plurality of first-type signals occupy different frequency domain resources, and the plurality of first-type signals and the plurality of SSBs occupy different frequency domain resources. For example, the network device sends the foregoing two SSBs within the first slot, and sends two first-type signals within the first slot. The two first-type signals respectively occupy a frequency domain resource #1 and a frequency domain resource #2, and the two SSBs occupy a frequency domain resource #3.

It should be noted that the plurality of first-type signals are in one-to-one correspondence with the plurality of second-type signals. Therefore, that the plurality of first-type signals and the plurality of SSBs may occupy different frequency domain resources may alternatively be replaced with that the plurality of second-type signals and the plurality of SSBs may occupy different frequency domain resources. When the first-type signals and the second-type signals occupy a same slot, that the plurality of first-type signals and the plurality of SSBs may occupy different frequency domain resources may alternatively be replaced with that the plurality of SIBs and the plurality of SSBs may occupy different frequency domain resources. Each SIB includes the first-type signal carried on the PDCCH and the second-type signal carried on the PDSCH.

The following describes in detail a case in which the plurality of first-type signals and the plurality of SSBs may occupy different frequency domain resources.

In a possible design, the plurality of first-type signals and the plurality of SSBs occupy a same slot. The first signal and the first SSB are used as examples. The first signal is one of the plurality of first-type signals, and the first SSB is an SSB corresponding to the first signal in the plurality of SSBs. The first signal and the first SSB occupy a same slot, but the first signal and the first SSB occupy different frequency domain resources.

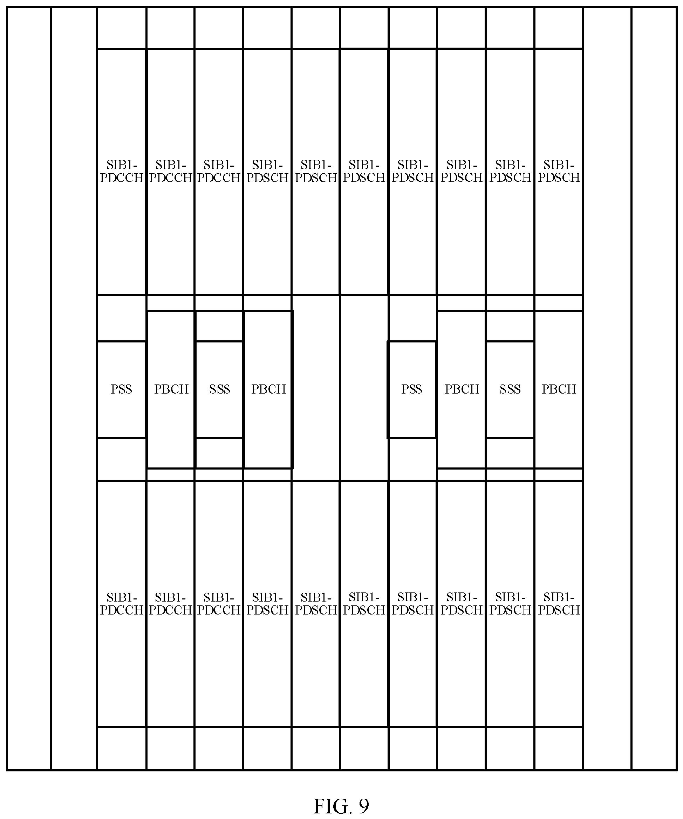

FIG. 9 is a diagram of multiplexing a SIB1 and an SSB according to an embodiment of this application. In FIG. 9, for example, a number of a plurality of SIBs (for example, SIB1s) is two and a number of a plurality of SSBs is two. In other words, the network device sends two SSBs and two SIB1s within one slot. A SIB1-PDCCH represents a channel used for carrying a first-type signal, a SIB1-PDSCH represents a channel used for carrying a second-type signal, and the SIB1 includes the first-type signal and the second-type signal.

As shown in FIG. 9, the network device sends the two SSBs within one slot, and may further send the two SIB1s within the same slot. For example, in FIG. 9, a signal carried on a PDCCH occupies three OFDM symbols in time domain, and a signal carried on a PDSCH occupies seven OFDM symbols in time domain. In this way, two slots originally used for transmitting the SIB1s may be used as data transmission (PDSCH) slots.

In another possible design, the plurality of first-type signals and the plurality of SSBs occupy different slots. The first signal and the first SSB are used as examples. The first signal is one of the plurality of first-type signals, and the first SSB is an SSB corresponding to the first signal in the plurality of SSBs. The first signal and the first SSB occupy different slots, and the first signal and the first SSB occupy different frequency domain resources. For example, the network device sends the first SSB within the first slot, where the first SSB occupies a frequency domain resource #1; and sends, within the second slot, the first signal corresponding to the first SSB, where the first signal occupies a frequency domain resource #2. The first slot and the second slot are different slots.

Optionally, an offset of the frequency domain resource occupied by the first signal relative to a first frequency domain baseline is predefined or indicated by first indication information carried in the first SSB. The first signal is one of the plurality of first-type signals, and the first SSB is an SSB corresponding to the first signal in the plurality of SSBs.

In other words, the offset of the frequency domain resource occupied by the first signal relative to the first frequency domain baseline may be predefined, or may be indicated by the network device to the terminal. This is not limited in this application.

Optionally, the foregoing first frequency domain baseline may be the frequency domain resource occupied by the first SSB. In other words, a frequency domain offset of the first signal may be an offset relative to the frequency domain resource occupied by the first SSB. A design of the first frequency domain baseline is merely an example, and should not constitute any limitation on this application. Another design may alternatively be used for the first frequency domain baseline. For example, the first frequency domain baseline is 0, and the network device may indicate, to the terminal, the frequency domain offset corresponding to the first signal, or may indicate a frequency domain offset corresponding to the first SSB. For example, the first frequency domain baseline is 0, the plurality of first-type signals include a signal #1 and a signal #2, and the plurality of SSBs include an SSB #1 and an SSB #2. The signal #1 corresponds to the SSB #1, and the signal #2 corresponds to the SSB #2. A frequency domain offset corresponding to the signal #1 is 1, frequency domain offsets corresponding to the SSB #1 and the SSB #2 are 97, and a frequency domain offset corresponding to the signal #2 is 99, where a unit is RB.

The following describes in detail a case in which the first frequency domain baseline is the frequency domain resource occupied by the first SSB.

In a possible design, an offset of a frequency domain resource occupied by each of the plurality of first-type signals relative to a frequency domain resource occupied by a corresponding SSB is a positive number.

In another possible design, an offset of a frequency domain resource occupied by each of the plurality of first-type signals relative to a frequency domain resource occupied by a corresponding SSB is a negative number.

In still another possible design, offsets of frequency domain resources occupied by a part of the plurality of first-type signals relative to frequency domain resources occupied by corresponding SSBs are positive numbers, and offsets of frequency domain resources occupied by the other part of the first-type signals relative to frequency domain resources occupied by corresponding SSBs are negative numbers.

It should be understood that, in this application, the first-type signals are in one-to-one correspondence with the plurality of second-type signals. Therefore, the plurality of second-type signals are in one-to-one correspondence with the plurality of SSBs. The foregoing three possible designs may also be used for offsets of the plurality of second-type signals relative to frequency domain resources occupied by corresponding SSBs, or the foregoing three possible designs may also be used for offsets of the plurality of SIBs relative to frequency domain resources occupied by corresponding SSBs. Each of the plurality of SIBs includes the signal carried on the PDCCH and the signal carried on the PDSCH.

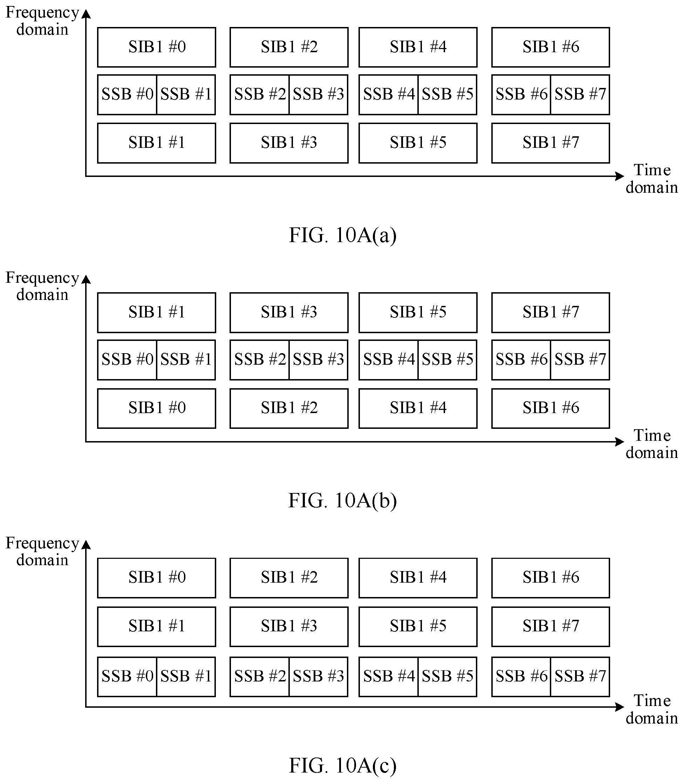

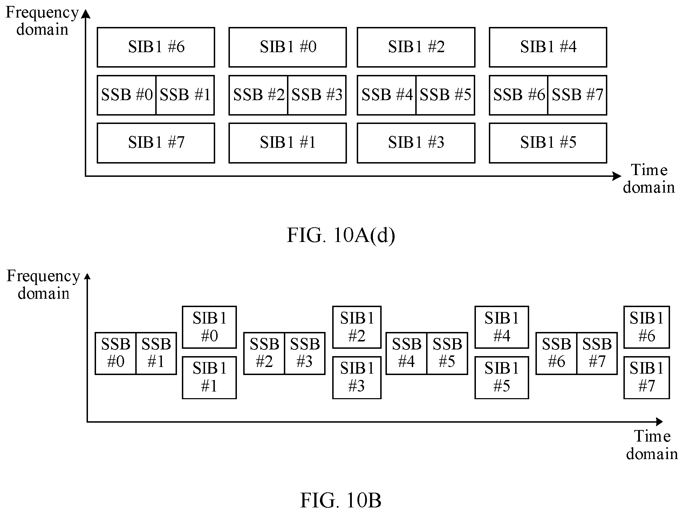

The following describes the foregoing possible designs in detail with reference to FIG. 10A(a), FIG. 10A(b), FIG. 10A(c), and FIG. 10A(d).

FIG. 10A(a), FIG. 10A(b), FIG. 10A(c), and FIG. 10A(d) each are another diagram of multiplexing a SIB and an SSB according to an embodiment of this application. In FIG. 10A(a), FIG. 10A(b), FIG. 10A(c), and FIG. 10A(d), for example, a number of a plurality of SIBs (for example, SIB1s) is two and a number of a plurality of SSBs is two. In other words, the network device sends two SSBs and two SIB1s within one slot. In FIG. 10A(a), FIG. 10A(b), FIG. 10A(c), and FIG. 10A(d), one SSB scanning periodicity is used as an example. In the SSB scanning periodicity, the network device sends eight SSBs. The eight SSBs are respectively identified by an SSB #0 to an SSB #7, and occupy a total of four downlink slots.

In FIG. 10A(a), FIG. 10A(b), FIG. 10A(c), and FIG. 10A(d), the SSB #0 corresponds to a SIB1 #0, the SSB #1 corresponds to a SIB1 #1, the SSB #2 corresponds to a SIB1 #2, the SSB #3 corresponds to a SIB1 #3, the SSB #4 corresponds to a SIB1 #4, the SSB #5 corresponds to a SIB1 #5, the SSB #6 corresponds to a SIB1 #6, and the SSB #7 corresponds to a SIB1 #7.

Frequency domain resources occupied by the SSBs may be fixed to be 20 RBs, and frequency domain resources occupied by the SIB1s are variable, for example, may be {24 RBs, 48 RBs, 96 RBs}, and are determined based on a "ControlResourceSetZero" field carried in a MIB on a PBCH. Maximum bandwidth allocated to a single CC of a downlink broadcast channel is 273 RBs. Therefore, a maximum of two SIB1s each with a length of 96 RBs can be transmitted in single-slot frequency domain. In this case, the SIB1 includes a signal carried on a PDCCH and a signal carried on a PDSCH. To maximize frequency domain resource utilization, for example, the two SIB1s may be sent within one slot.

As shown in FIG. 10A(a), , within a same slot, a frequency domain offset of a SIB1 corresponding to a 1^{st} SSB is a positive number, and a frequency domain offset of a SIB1 corresponding to a 2^{nd} SSB is a negative number. For example, frequency domain offsets of the SIB1 #0, the SIB1 #2, the SIB1 #4, and the SIB1 #6 are greater than 0, and frequency domain offsets of the SIB1 #1, the SIB1 #3, the SIB1 #5, and the SIB1 #7 are less than 0.

As shown in FIG. 10A(b), within a same slot, a frequency domain offset of a SIB1 corresponding to a 1^{st} SSB is a negative number, and a frequency domain offset of a SIB1 corresponding to a 2^{nd} SSB is a positive number. For example, frequency domain offsets of the SIB1 #0, the SIB1 #2, the SIB1 #4, and the SIB1 #6 are less than 0, and frequency domain offsets of the SIB1 #1, the SIB1 #3, the SIB1 #5, and the SIB1 #7 are greater than 0.

As shown in FIG. 10A(c), within a same slot, a frequency domain offset of a SIB1 corresponding to each SSB is a positive number or is a negative number. For example, frequency domain offsets of the SIB1 #0, the SIB1 #2, the SIB1 #4, and the SIB1 #6 are greater than 0, and frequency domain offsets of the SIB1 #1, the SIB1 #3, the SIB1 #5, and the SIB1 #7 are greater than 0.

As shown in FIG. 10A(d), within a same slot, a frequency domain offset of a SIB1 corresponding to a 1^{st} SSB is a positive number, and a frequency domain offset of a SIB1 corresponding to a 2^{nd} SSB is a negative number. The SSB and the corresponding SIB1 are not within a same slot, and a slot offset exists. For example, frequency domain offsets of the SIB1 #0, the SIB1 #2, and the SIB1 #4 are greater than 0, and a slot offset is one slot; frequency domain offsets of the SIB1 #1, the SIB1 #3, and the SIB1 #5 are less than 0, and a slot offset is one slot; a frequency domain offset of the SIB1 #6 is greater than 0, and a slot offset is one SSB periodicity (for example, 40 slots); and a frequency domain offset of the SIB1 #7 is less than 0, and a slot offset is 40 slots.

It should be understood that, in FIG. 10A(d), that within the same slot, the frequency domain offset of the SIB1 corresponding to the 1^{st} SSB is a positive number, and the frequency domain offset of the SIB1 corresponding to the 2^{nd} SSB is a negative number is merely used as an example, and should not constitute any limitation on this application. For example, within the same slot, the frequency domain offset of the SIB1 corresponding to the 1^{st} SSB may be a negative number, and the frequency domain offset of the SIB1 corresponding to the 2^{nd} SSB may be a positive number; or within the same slot, the frequency domain offset of the SIB1 corresponding to the 1^{st} SSB and the frequency domain offset of the SIB1 corresponding to the 2^{nd} SSB are both positive numbers or are both negative numbers.

It may be understood that, in FIG. 10A(a), FIG. 10A(b), FIG. 10A(c), and FIG. 10A(d), for example, the plurality of SIBs and the plurality of SSBs occupy different frequency domain resources. As described above, the plurality of SSBs and the plurality of SIBs may be alternatively transmitted in time division, and the plurality of SIBs are frequency division multiplexed, that is, the plurality of SIBs occupy a same slot but different frequency domain resources. The following describes the foregoing scenario with reference to FIG. 10B.

FIG. 10B is still another diagram of multiplexing a SIB and an SSB according to an embodiment of this application.

As shown in FIG. 10B, the network device sends an SSB #0 and an SSB #1 within the first slot, and sends a SIB1 #0 and a SIB1 #1 within a next slot. The SIB1 #0 and the SIB1 #1 occupy different frequency domain resources, and the SIB1 #0 and the SSB #0 may occupy a same frequency domain resource or different frequency domain resources. The SIB1 #1 and the SSB #1 may occupy a same frequency domain resource or different frequency domain resources. This is not limited in this application. A frequency domain offset of the SIB1 #0 relative to the SSB #0 is a positive number, and a frequency domain offset of the SIB1 #1 relative to the SSB #1 is a negative number. Designs of frequency domain offsets of a SIB1 #3 to a SIB1 #7 relative to corresponding SSBs are similar to designs of those of the SIB1 #0 and the SIB1 #1. Details are not described herein again.

In addition, for more possible designs of frequency domain offsets of the SIB1 #0 to the SIB1 #7 relative to corresponding SSBs, refer to FIG. 10A(a), FIG. 10A(b), FIG. 10A(c), and FIG. 10A(d). Details are not described herein again.

It should be understood that FIG. 10B shows a scenario in which the network device continuously sends two SSBs. However, this should not constitute any limitation on this application. For example, the network device may alternatively continuously send more SSBs, for example, four SSBs, and then send four SIB1s corresponding to the four SSBs, where two SIB1s are frequency division multiplexed, and the other two SIB1s are frequency division multiplexed. For a specific frequency division multiplexing manner, refer to FIG. 10B. Details are not described herein again.

Optionally, the first SSB carries second indication information. The second indication information indicates that the first SSB and the first signal are frequency division multiplexed, the frequency division multiplexing is one of a plurality of multiplexing modes, and the plurality of multiplexing modes include time division multiplexing and/or frequency division multiplexing.

The network device may indicate the multiplexing mode of the first SSB and the first signal to the terminal. For example, if frequency division multiplexing (multiplexing modes shown in FIG. 10A(a), FIG. 10A(b), and FIG. 10A(c) are frequency division multiplexing) (denoted as a multiplexing mode 1) and time division multiplexing (denoted as a multiplexing mode 2) are supported for an FR 1, the network device may indicate the multiplexing mode of the first SSB and the first signal to the terminal.

It may be understood that the first signal corresponds to a second signal and a first SIB (the first SIB may include the first signal and the second signal), and that the second indication information indicates that the first SSB and the first signal are frequency division multiplexed may alternatively be replaced with that the second indication information indicates that the first SSB and the second signal are frequency division multiplexed, or that the first SSB and the first SIB are frequency division multiplexed.

In a possible design, as shown in Table 3, the network device indicates the multiplexing mode of the first signal and the first SSB to the terminal by using a reserved field (for example, one bit) of a MIB on a PBCH. For example, a value 0 of the reserved field indicates a multiplexing mode 1, and a value 1 of the reserved field indicates a multiplexing mode 2; or a value 1 of the reserved field indicates a multiplexing mode 1, and a value 0 of the reserved field indicates a multiplexing mode 2.

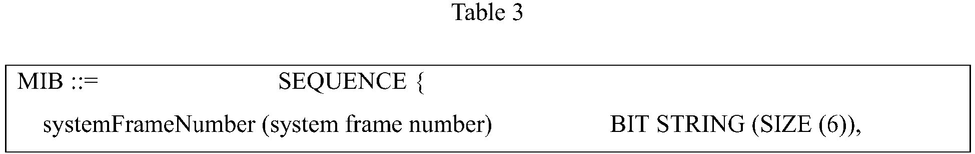

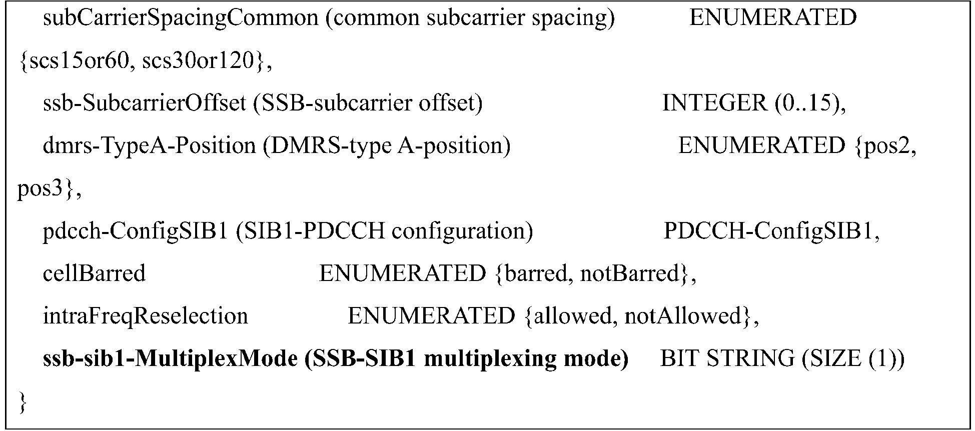

In addition, the network device and the terminal may preagree on whether a frequency domain offset of the first signal relative to the first SSB is positive or negative in the multiplexing mode 1. In an example, when an index value of the first SSB obtained by the terminal is an even number (for example, 0, 2, 4, or 6), an offset indicated in a subsequent "ControlResourceSetZero" field is a positive number; or when an index value of the first SSB is an odd number (1, 3, 5, or 7), an offset indicated in a subsequent "ControlResourceSetZero" field is a negative number. Alternatively, when an index value of the first SSB obtained by the terminal is an even number (for example, 0, 2, 4, or 6), an offset indicated in a subsequent "ControlResourceSetZero" field is a negative number; or when an index value of the first SSB is an odd number (1, 3, 5, or 7), an offset indicated in a subsequent "ControlResourceSetZero" field is a positive number. This is not limited in this application.

In another example, the network device and the terminal preagree that offsets indicated in a subsequent "ControlResourceSetZero" field are all positive numbers or are all negative numbers.

It may be understood that when the network device and the terminal agree that the offset indicated in the subsequent "ControlResourceSetZero" field is a negative number, after obtaining the offset, the terminal can use an opposite number of the offset as a frequency domain offset corresponding to the first signal.

In another possible design, the network device directly uses the "ControlResourceSetZero" field to indicate the multiplexing mode of the first signal and the first SSB to the terminal. In addition, the "ControlResourceSetZero" field may further indicate a frequency domain offset corresponding to the first signal and whether the frequency domain offset is positive or negative. This design helps improve flexibility of the multiplexing mode of the first SSB and the first signal. For example, when SIBs with different frequency domain lengths (for example, 48 RBs and 96 RBs) appear in a same SSB scanning periodicity (5 ms), a positive value and a negative value of the frequency domain offset may be switched, and are more flexibly indicated by using the "ControlResourceSetZero" field.

Optionally, a system frame number, a slot number, and a start symbol of the first signal are predefined or indicated by third indication information in the first SSB.

In this application, the system frame number, the slot number, and the start symbol that are corresponding to the first signal may be understood as a system frame number, a slot number, and a start symbol that are corresponding to a PDCCH carrying the first signal, or a system frame number, a slot number, and a start symbol of a CORESET 0.

In a possible design, the system frame number, the slot number, and the start symbol of the first signal are predefined.

In another possible design, the network device indicates the system frame number, the slot number, and the start symbol of the first signal to the terminal.

For example, the network device may indicate a monitoring occasion (monitoring occasion) and a start symbol position of the first signal by using a MIB (for example, a "SearchSpaceZero" field). The monitoring occasion includes the system frame number (which may be denoted as SFN_{c}) and the slot number (which may be denoted as n_{c}), and the start symbol position is a start OFDM symbol index of the first signal within a slot n_{c}.

The following describes in detail a relationship met by the system frame number, the slot number, and the start symbol of the first signal and a system frame number, a slot number, and a start symbol of the first SSB.

In a possible design, the system frame number of the first signal is the same as the system frame number of the first SSB.

In this case, the slot number of the first signal is the same as the slot number of the first SSB, that is, the first signal and the first SSB occupy a same slot; or the slot number of the first signal = the slot number of the first SSB + n, that is, the first signal and the first SSB occupy different slots, and the slot number of the first signal is a sum of the slot number of the first SSB and n.

n is a positive integer and n ≤ a number of slots included in one system frame - 1, that is, n is less than or equal to a difference between the number of slots included in one system frame and 1.

That the slot number of the first signal = the slot number of the first SSB + n is merely an example, and should not constitute any limitation on this application. A simple transformation of the foregoing formula should also fall within the protection scope of this application. For example, the slot number of the first signal = the slot number of the first SSB - n.

For example, as shown in FIG. 10A(a), FIG. 10A(b), and FIG. 10A(c), the system frame number of the first signal is the same as the system frame number of the first SSB, and the slot number of the first signal is the same as the slot number of the first SSB.

For another example, as shown in FIG. 10A(d), when an index value of an SSB is 0, 1, 2, 3, 4, or 5, a system frame number of a first signal corresponding to the SSB is the same as a system frame number of the SSB, but a slot number of the first signal = a slot number of the SSB + 1.

In another possible design, the system frame number of the first signal = the system frame number of the first SSB + m, where m is a number of system frames included in one periodicity of the first SSB. In other words, the first signal and the first SSB occupy different slots, and the system frame number of the first signal is a sum of the system frame number of the first SSB and m.

For example, assuming that one SSB periodicity is 20 ms, m=2. As shown in FIG. 10A(d), when an index value of an SSB is 6 or 7, a system frame number of a first signal corresponding to the SSB = a system frame number of the SSB + 2.

When the system frame number of the first signal = the system frame number of the first SSB + m, the slot number of the first signal = a slot number corresponding to a 1^{st} SSB in a next SSB periodicity.

For example, as shown in FIG. 10A(d), when an index value of an SSB is 6 or 7, a slot number of a first signal corresponding to the SSB = a slot number corresponding to a 1^{st} SSB in a next SSB periodicity.

For the start symbol of the first signal, in a possible design, the start symbol of the first signal is fixed, and the start symbol of the first signal is irrelevant to the start symbol of the first SSB. For example, a start symbol index (first symbol index) of the first signal is 0. In this way, the start symbol of the first signal is fixed, helping reduce signaling overheads. In this case, the start symbol of the first signal may be different from the start symbol of the first SSB.

In another possible design, the start symbol of the first signal is related to the start symbol of the first SSB. For example, the start symbol of the first signal is the same as the start symbol of the first SSB. The following first briefly describes possible designs of the start symbol of the first SSB.

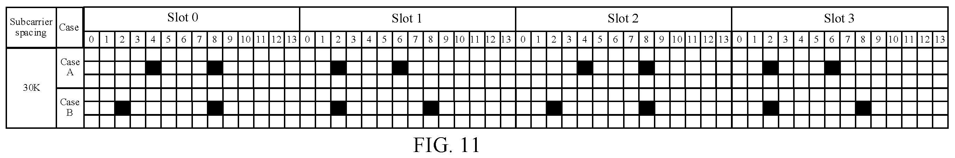

FIG. 11 is a diagram of the start symbol of the first SSB according to an embodiment of this application.

As shown in FIG. 11, in a possible case (denoted as case A), start symbol indexes in a slot 0 and a slot 2 are 4, and start symbol indexes in a slot 1 and a slot 3 are 2. In another possible case (denoted as case B), start symbol indexes in the slot 0 to the slot 3 are all 2.

When the start symbol of the first SSB is as case C, the start symbol index of the first signal is 2. When the start symbol of the first SSB is as case B, the start symbol of the first signal meets the following design:

When the first SSB and the first signal occupy a same slot (as shown in FIG. 10A(a), FIG. 10A(b), and FIG. 10A(c)), when an index value of the first SSB is 0, 1, 4, or 5, the start symbol index of the first signal = 4; or when an index value of the first SSB is 2, 3, 6, or 7, the start symbol index of the first signal = 2. In other words, when the index value of the first SSB is {*i* = 4*k, i* = 4*k* + 1, *i* = 4*k* + 2, *i* = 4k + 3} (k = 0 or 1), the start symbol index of the first signal is {4, 4, 2, 2}.

When the first SSB and the first signal occupy different slots, and a slot offset is 1 (as shown in FIG. 10A(d)), when an index value of the first SSB is 0, 1, 4, or 5, the start symbol index of the first signal = 2; or when an index value of the first SSB is 2, 3, 6, or 7, the start symbol index of the first signal = 4. In other words, when the index value of the first SSB is {*i =* 4*k, i =* 4*k +* 1, *i* = 4*k* + 2, *i* = 4*k* + 3} (k = 0 or 1), the start symbol index of the first signal is {2, 2, 4, 4}.

In this application, a formula is used as an example of the relationship met by the system frame number, the slot number, and the start symbol of the first signal and the system frame number, the slot number, and the start symbol of the first SSB. However, this should not constitute any limitation on this application. For example, a form such as a table, an array, a queue, a container, a stack, a linear table, a pointer, a linked list, a tree, a graph, a structure, a class, a pile, a hash table, or a hash table may be used. For example, Table 4 shows the relationship met by the system frame number, the slot number, and the start symbol of the first signal and the system frame number, the slot number, and the start symbol of the first SSB.

Table 4 shows possible designs of the monitoring occasion and the start symbol of the first signal. SFN_{SSB,*i*} represents the system frame number of the first SSB corresponding to the first signal. *n*_{SSB,*i*} represents the slot number of the first SSB. *n*_{SSB,*j*} represents the slot number of the 1^{st} SSB in the next SSB periodicity.

**Table 4**

| SSB index | Monitoring occasion | Start symbol index (k= 0 or 1) |
|---|---|---|
| 0 | SFN_{c} = SFN_{SSB,*i*} | 0 |
| | *n*_{c} = *n*_{SSB,*i*} | |
| 1 | SFN_{c} = SFN_{SSB,*i*} | 4, 4, 2, 2 {*i =* 4*k, i =* 4*k +* 1*, i =* 4*k + 2, i =* 4*k +* 3} |
| | *n*_{c} = *n*_{SSB,*i*} | |
| 2 | SFN_{c} = SFN_{SSB,*i*}(*i* = 0~5) | 0 |
| | SFN_{c} = SFN_{SSB,*i*} + *2*(*i* = 6,7) | |
| | *n*_{c} = *n*_{SSB,*i*} + 1(*i* = 0~5) | |
| | *n*_{c} = *n*_{SSB*,j*}(*i* = 6,7) | |
| 3 | SFN_{c} = SFN_{SSB,*i*}(*i* = 0~5) | 2, 2, 4, 4 {*i =* 4*k, i =* 4*k +* 1*, i =* 4*k +* 2, *i =* 4*k +* 3} |
| | SFN_{c} = SFN_{SSB,*i*} + *2*(*i* = 6,7) | |
| | *n*_{c} = *n*_{SSB,*i*} + 1(*i* = 0~5) | |
| | *n*_{c} = *n*_{SSB*,j*}(*i* = 6,7) | |
| 4 | SFN_{c} = SFN_{SSB,*i*} | 2 |
| | *n*_{c} = *n*_{SSB,*i*} | |
| 5 | SFN_{c} = SFN_{SSB,*i*}(*i* = 0~5) | 2 |
| | SFN_{c} = SFN_{SSB,*i*} + 2(*i* = 6,7) | |
| | *n*_{c} = *n*_{SSB,*i*} + 1(*i* = 0~5) | |
| | *n*_{c} = *n*_{SSB*,j*}(*i* = 6,7) | |
| 6 to 15 | Reserved | |

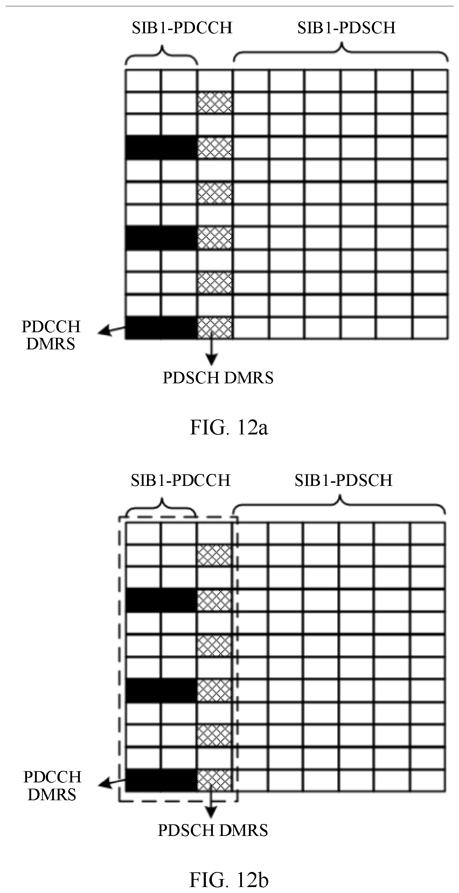

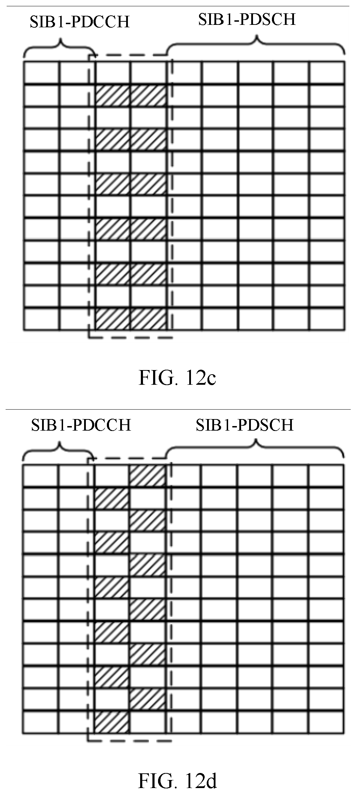

The following describes in detail a DMRS corresponding to the first signal and a DMRS corresponding to the second signal with reference to FIG. 12a, FIG. 12b, FIG. 12c, and FIG. 12d.

FIG. 12a, FIG. 12b, FIG. 12c, and FIG. 12d each are a diagram of DMRSs according to an embodiment of this application. FIG. 12a is an existing DMRS design, and FIG. 12b, FIG. 12c, and FIG. 12d are DMRS designs in this application.

As shown in FIG. 12a, the DMRS corresponding to the first signal and the DMRS corresponding to the second signal are separately designed, and antenna port numbers of the two DMRSs are different. A port number of the DMRS corresponding to the first signal is 2000, and a port number of the DMRS corresponding to the second signal is 1000. Consequently, DMRS resource overheads and channel estimation performance gains are unbalanced. Therefore, in this application, the following three possible designs are provided.

As shown in FIG. 12b, in a first possible design, the demodulation reference signal DMRS corresponding to the first signal is a first DMRS, and the DMRS corresponding to the second signal is a second DMRS. The first DMRS and the second DMRS have a same port number, and the first DMRS and the second DMRS have a same precoding granularity. The first signal is one of the plurality of first-type signals, and the second signal is a second-type signal corresponding to the first signal in the plurality of second-type signals.

As shown in FIG. 12c, in a second possible design, the DMRS corresponding to the first signal and the DMRS corresponding to the second signal are a same DMRS. A time domain resource occupied by the DMRS includes a first symbol and a second symbol. Frequency domain resources occupied by the DMRS on the first symbol and the second symbol are the same. The first signal is one of the plurality of first-type signals, and the second signal is a second-type signal corresponding to the first signal in the plurality of second-type signals.

As shown in FIG. 12d, in a third possible design, the DMRS corresponding to the first signal and the DMRS corresponding to the second signal are a same DMRS. A time domain resource occupied by the DMRS includes a first symbol and a second symbol. Frequency domain resources occupied by the DMRS on the first symbol and the second symbol are different.

The DMRS corresponding to the first signal may be replaced with a DMRS corresponding to a PDCCH carrying the first signal, and the DMRS corresponding to the second signal may be replaced with a DMRS corresponding to a PDSCH carrying the second signal. The DMRS corresponding to the PDCCH carrying the first signal may be understood as that the DMRS may be used for demodulating the PDCCH, and the DMRS corresponding to the PDSCH carrying the second signal may be understood as that the DMRS may be used for demodulating the PDSCH.

It may be understood that in NR, a maximum of four CCs (for example, a CC #0 to a CC #3) can be used for carrier aggregation. In a possible implementation, frequency division multiplexing is performed on a SIB1 and an SSB on only one CC every 20 ms (or a SIB1 and an SSB are frequency division multiplexed, or a signal for scheduling a SIB1 and an SSB are frequency division multiplexed). No SIB1 is sent on the remaining CCs, and traversal is performed on the CC #0 to the CC #3 within 80 ms.

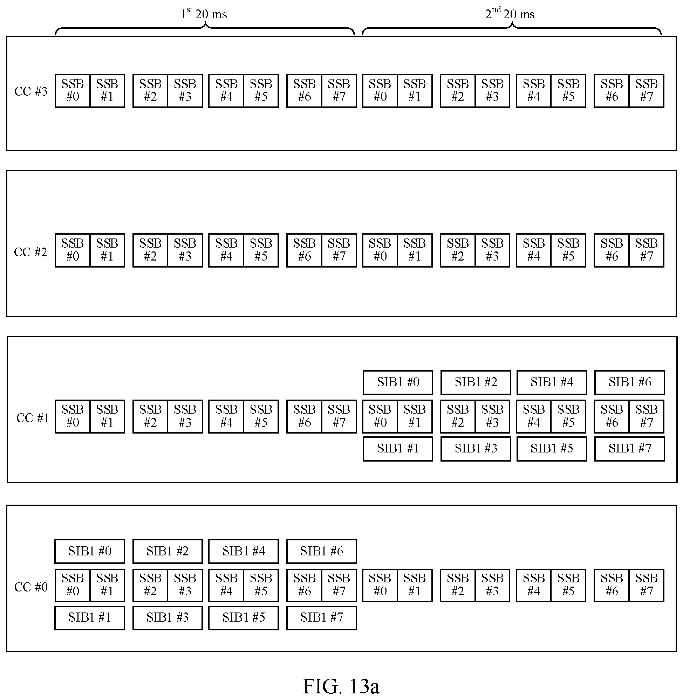

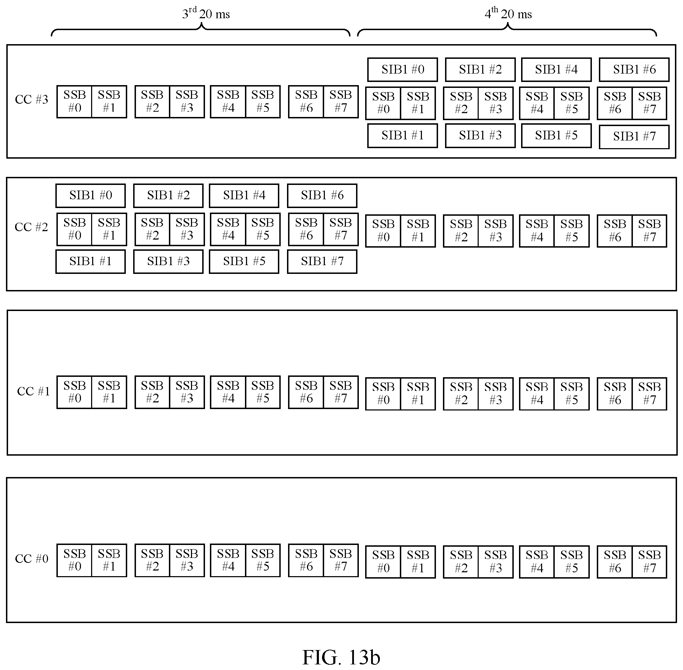

FIG. 13a and FIG. 13b each are a diagram of component carrier switching for frequency division multiplexing according to an embodiment of this application.

As shown in FIG. 13a, frequency division is performed on a CC #0 within 1^{st} 20 ms, and frequency division is performed on a CC #1 within 2^{nd} 20 ms. As shown in FIG. 13b, frequency division is performed on a CC #2 within 3^{rd} 20 ms, and frequency division is performed on a CC #3 within 4^{th} 20 ms. In this way, a periodicity of a SIB1 of each cell is flexibly controlled, to ensure that frequency division multiplexing is performed in only one cell at each moment, and another cell does not send the SIB1, helping reduce slot occupancy of the SIB1.

According to the foregoing technical solution, after sending the plurality of SSBs, the network device may send the plurality of first-type signals corresponding to the plurality of SSBs. The plurality of first-type signals are used for scheduling the plurality of second-type signals. The plurality of first-type signals occupy a same slot but different frequency domain resources. In other words, the plurality of first-type signals may be frequency division multiplexed. In this way, slot occupancy is reduced, and a slot originally used for transmitting the first-type signals can be reused for other signals, thereby helping improve downlink capacity. In addition, the plurality of first-type signals occupy different frequency domain resources, which also helps improve frequency domain resource utilization.

The foregoing describes in detail the signal transmission method provided in embodiments of this application with reference to accompanying drawings. The following describes in detail apparatuses provided in embodiments of this application with reference to accompanying drawings.

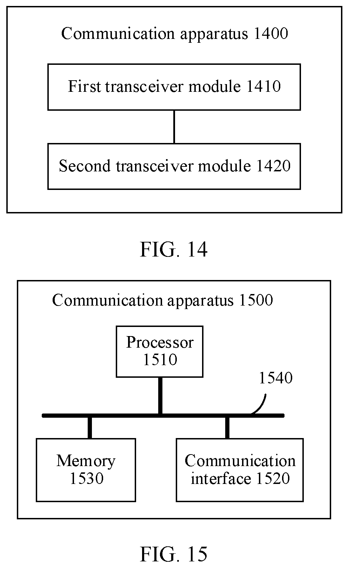

It should be understood that apparatuses shown in FIG. 14 and FIG. 15 may be configured to implement functions of the network device or the terminal in the foregoing method embodiments, and therefore can also implement beneficial effects of the foregoing method embodiments. In embodiments of this application, the apparatuses may be the network device in the method embodiment shown in FIG. 8, or may be a component (such as a chip, a chip system, or a processor) configured in the network device, or may be a logic module or software that can implement some or all functions of the network device. Alternatively, the apparatuses may be the terminal in the method embodiment shown in FIG. 8, or may be a component (such as a chip, a chip system, or a processor) configured in the terminal, or may be a logic module or software that can implement some or all functions of the terminal.

FIG. 14 is a block diagram of a communication apparatus 1400 according to an embodiment of this application.

As shown in FIG. 14, the communication apparatus 1400 includes a first transceiver module 1410 and a second transceiver module 1420. The communication apparatus 1400 may be configured to implement functions of the network device or the terminal in the foregoing method embodiment shown in FIG. 8.

When the apparatus 1400 is configured to implement the functions of the network device in the method embodiment shown in FIG. 8, the first transceiver module 1410 is configured to send a plurality of SSBs, and the second transceiver module 1420 is configured to send a plurality of first-type signals. The plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources.

When the apparatus 1400 is configured to implement the functions of the terminal in the method embodiment shown in FIG. 8, the first transceiver module 1410 is configured to receive a first SSB, where the first SSB is one of a plurality of SSBs. The second transceiver module 1420 is configured to receive a first signal, where the first signal is one of a plurality of first-type signals. The plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources.

Optionally, the first signal and the first SSB occupy different frequency domain resources. The foregoing first signal is one of the plurality of first-type signals, and the foregoing first SSB is an SSB corresponding to the first signal in the plurality of SSBs.

Optionally, the foregoing first signal and the foregoing first SSB occupy a same slot or different slots.

Optionally, a frequency domain offset corresponding to the first signal is predefined or indicated by first indication information carried in the first SSB. The frequency domain offset corresponding to the first signal is an offset of a frequency domain resource occupied by the first signal relative to a first frequency domain baseline.

Optionally, the foregoing first frequency domain baseline may be a frequency domain resource occupied by the first SSB.

Optionally, the first SSB carries second indication information. The second indication information indicates that the first SSB and the first signal are frequency division multiplexed, the frequency division multiplexing is one of a plurality of multiplexing modes, and the plurality of multiplexing modes include time division multiplexing and/or frequency division multiplexing.

Optionally, a system frame number, a slot number, and a start symbol of the first signal are predefined or indicated by third indication information in the first SSB.

Optionally, the system frame number of the first signal is the same as a system frame number of the first SSB.

Optionally, the slot number of the first signal is the same as a slot number of the first SSB, or the slot number of the first signal = a slot number of the first SSB + n, where n is a positive integer and n ≤ a number of slots included in one system frame - 1.

Optionally, the system frame number of the first signal = the system frame number of the first SSB + m, where m is a number of system frames included in one SSB periodicity.

Optionally, the slot number of the first signal = a slot number corresponding to a 1^{st} SSB in a next SSB periodicity.

Optionally, a DMRS corresponding to the first signal is a first DMRS, a DMRS corresponding to a second signal is a second DMRS, the first DMRS and the second DMRS have a same port number, and the first DMRS and the second DMRS have a same precoding granularity. The first signal is one of the plurality of first-type signals, and the second signal is a second-type signal corresponding to the first signal in the plurality of first-type signals.

Optionally, a DMRS corresponding to the first signal and a DMRS corresponding to a second signal are a same DMRS. A time domain resource occupied by the DMRS includes a first symbol and a second symbol. Frequency domain resources occupied by the DMRS on the first symbol and the second symbol are the same or different. The first signal is one of the plurality of first-type signals, and the second signal is a second-type signal corresponding to the first signal in the plurality of second-type signals.

For more detailed descriptions about the foregoing modules, directly refer to the related description in the method embodiment shown in FIG. 8. Details are not described herein again.

It should be understood that module division in embodiments of this application is an example, and is only logical function division. During an actual implementation, there may be another division manner. In addition, functional modules in embodiments of this application may be integrated into one processor, or may exist alone physically, or two or more modules may be integrated into one module. The foregoing integrated module may be implemented in a form of hardware, or may be implemented in a form of a software functional module.

FIG. 15 is another block diagram of a communication apparatus 1500 according to an embodiment of this application.

The apparatus 1500 may be a chip system, or may be a device configured with a chip system, to implement the method in the foregoing method embodiments. In embodiments of this application, the chip system may include a chip, or may include a chip and another discrete component.

As shown in FIG. 15, the apparatus 1500 may include a processor 1510. The processor 1510 may be configured to execute a computer program or instructions in a memory, to implement the steps performed by the network device or the steps performed by the terminal in the method embodiment shown in FIG. 8.

Optionally, the apparatus 1500 further includes a communication interface 1520. The communication interface 1520 may be configured to communicate with another device through a transmission medium, so that the apparatus 1500 can communicate with the another device. The communication interface 1520 may be, for example, a transceiver, an interface, a bus, a circuit, or an apparatus that can implement a transceiver function. The processor 1510 may input and output data through the communication interface 1520, and is configured to implement the method in the embodiment corresponding to FIG. 8. Specifically, the apparatus 1500 may be configured to implement functions of the network device or the terminal in the foregoing method embodiments.

Optionally, the apparatus 1500 further includes at least one memory 1530, configured to store program instructions and/or data. The memory 1530 is coupled to the processor 1510. The coupling in embodiments of this application may be an indirect coupling or a communication connection between apparatuses, units, or modules in an electrical form, a mechanical form, or another form, and is used for information exchange between the apparatuses, the units, or the modules. The processor 1510 may cooperate with the memory 1530. The processor 1510 may execute the program instructions stored in the memory 1530. At least one of the at least one memory may be included in the processor.

It should be further understood that the coupling in embodiments of this application may be an indirect coupling or a communication connection between apparatuses, units, or modules in an electrical form, a mechanical form, or another form, and is used for information exchange between the apparatuses, the units, or the modules. The processor 1510 may cooperate with the memory 1530. A specific connection medium between the foregoing processor 1510, the communication interface 1520, and the memory 1530 is not limited in embodiments of this application. In this embodiment of this application, in FIG. 15, the processor 1510, the communication interface 1520, and the memory 1530 are connected through a bus 1540. The bus 1540 is represented by a bold line in FIG. 15, and a connection manner between other components is merely described as an example, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 15, but this does not mean that there is only one bus or only one type of bus.

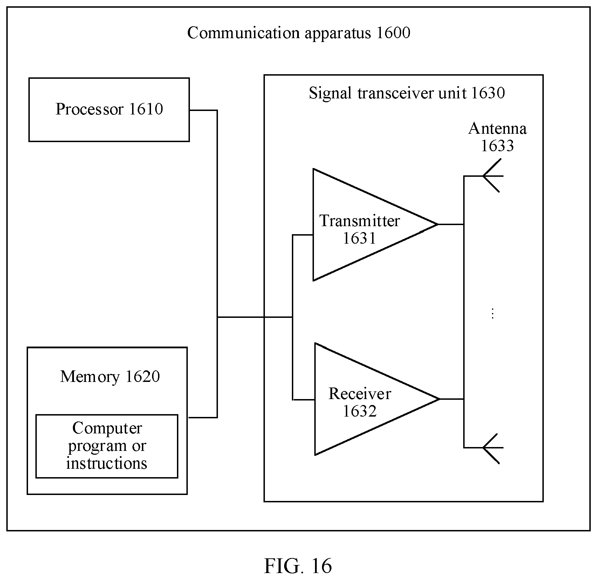

FIG. 16 is a diagram of a structure of a communication apparatus 1600 according to an embodiment of this application.

The communication apparatus 1600 may be, for example, a network device or a terminal. The apparatus 1600 may be configured to implement the method performed by the network device or the terminal in the embodiment shown in FIG. 8. The apparatus 1600 logically includes a plurality of parts, such as a processor 1610, a memory 1620, and a signal transceiver unit 1630, configured to implement communication, signaling exchange, and the like of the network device and the terminal. The memory 1620 stores a computer program or instructions. When the apparatus 1600 executes the foregoing computer program or instructions, the method shown in FIG. 8 can be implemented. The signal transceiver unit 1630 includes a transmitter 1631, a receiver 1632, and antennas 1633. For example, when the communication apparatus 1600 is the network device, the receiver 1632 may be configured to receive information through the antenna 1633, and the transmitter 1631 may be configured to send information through the antenna 1633.

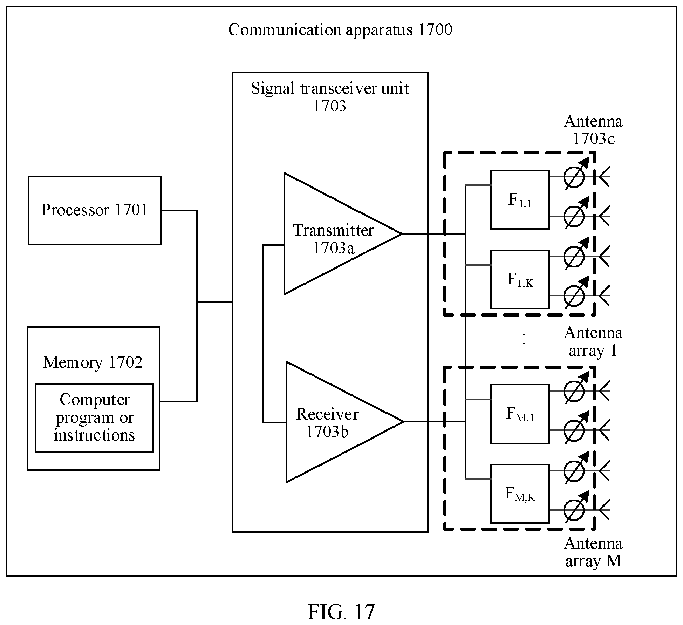

FIG. 17 is another diagram of a structure of a communication apparatus 1700 according to an embodiment of this application.

The communication apparatus 1700 may be, for example, a terminal or a network device. The apparatus 1700 may be configured to implement the method in the embodiment shown in FIG. 8. The apparatus 1700 logically includes a plurality of parts, such as a processor 1701, a memory 1702, and a signal transceiver unit 1703. The memory 1702 may be configured to store a computer program (which may also be referred to as code or instructions). The signal transceiver unit 1703 is configured to implement communication, signaling exchange, signal amplification, and the like of the network device and the terminal. The signal transceiver unit 1703 includes a transmitter 1703a, a receiver 1703b, and antennas 1703c. In the antennas 1703c, one block represents one digital channel, F in blocks is a digital precoding weight, and one phase shifter (a circle with an oblique arrow) represents one analog channel and is connected to one or more elements. That is, in practice, one phase shifter may control a plurality of elements, or the phase shifter and the elements are cross-connected.

This application further provides a computer program product. The computer program product includes a computer program (which may also be referred to as code or instructions). When the computer program is run, the steps performed by the network device or the steps performed by the terminal in the method in the embodiment shown in FIG. 8 can be implemented.

This application further provides a computer-readable storage medium. The computer-readable storage medium stores a computer program (which may also be referred to as code or instructions). When the computer program is run, the steps performed by the network device or the steps performed by the terminal in the method in the embodiment shown in FIG. 8 can be implemented.

An embodiment of this application provides a communication system. The system includes the network device and the terminal described above.

It should be noted that the processor in embodiments of this application may be an integrated circuit chip, and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may also be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may represent computerrelated entities, hardware, firmware, combinations of hardware and software, software, or software being executed. The units and the modules in embodiments of this application have a same meaning, and may be used interchangeably.

A person of ordinary skill in the art may be aware that, various illustrative logical blocks (illustrative logical block) and steps (steps) that are described with reference to embodiments disclosed in this specification may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the foregoing described apparatus embodiments are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solidstate disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to technologies, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
sending a plurality of synchronization signal blocks SSBs; and
sending a plurality of first-type signals, wherein the plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources.

2. The method according to claim 1, wherein a frequency domain resource occupied by a first signal is different from a frequency domain resource occupied by a first SSB, the first signal is one of the plurality of first-type signals, and the first SSB is an SSB corresponding to the first signal in the plurality of SSBs.

3. The method according to claim 2, wherein the first signal and the first SSB occupy a same slot or different slots.

4. The method according to claim 2 or 3, wherein an offset of the frequency domain resource occupied by the first signal relative to a first frequency domain baseline is predefined or indicated by first indication information carried in the first SSB.

5. The method according to claim 4, wherein the first frequency domain baseline is the frequency domain resource occupied by the first SSB.

6. The method according to any one of claims 2 to 5, wherein the first SSB carries second indication information, the second indication information indicates that the first SSB and the first signal are frequency division multiplexed, the frequency division multiplexing is one of a plurality of multiplexing modes, and the plurality of multiplexing modes comprise time division multiplexing and/or frequency division multiplexing.

7. The method according to any one of claims 2 to 6, wherein a system frame number, a slot number, and a start symbol of the first signal are predefined or indicated by third indication information in the first SSB.

8. The method according to claim 7, wherein the system frame number of the first signal is the same as a system frame number of the first SSB.

9. The method according to claim 8, wherein the slot number of the first signal is the same as a slot number of the first SSB, or the slot number of the first signal = a slot number of the first SSB + n, wherein n is a positive integer and n ≤ a number of slots comprised in one system frame - 1.

10. The method according to claim 7, wherein the system frame number of the first signal = a system frame number of the first SSB + m, wherein m is a number of system frames comprised in one SSB periodicity.

11. The method according to claim 10, wherein the slot number of the first signal = a slot number corresponding to a 1^{st} SSB in a next SSB periodicity.

12. The method according to any one of claims 1 to 11, wherein a demodulation reference signal DMRS corresponding to the first signal is a first DMRS, a DMRS corresponding to a second signal is a second DMRS, the first DMRS and the second DMRS have a same port number, the first DMRS and the second DMRS have a same precoding granularity, the first signal is one of the plurality of first-type signals, and the second signal is a second-type signal, in the plurality of second-type signals, scheduled by using the first signal.

13. The method according to any one of claims 1 to 11, wherein a DMRS corresponding to the first signal and a DMRS corresponding to a second signal are a same DMRS, a time domain resource occupied by the DMRS comprises a first symbol and a second symbol, frequency domain resources occupied by the DMRS on the first symbol and the second symbol are the same or different, the first signal is one of the plurality of first-type signals, and the second signal is a second-type signal, in the plurality of second-type signals, scheduled by using the first signal.

14. A signal transmission method, comprising:
receiving a first synchronization signal block SSB, wherein the first SSB is one of a plurality of SSBs; and
receiving a first signal, wherein the first signal is one of a plurality of first-type signals, the plurality of first-type signals are in one-to-one correspondence with the plurality of SSBs, the plurality of first-type signals are used for scheduling a plurality of second-type signals, the plurality of first-type signals are in one-to-one correspondence with the plurality of second-type signals, the plurality of first-type signals occupy a same slot, and the plurality of first-type signals occupy different frequency domain resources.

15. The method according to claim 14, wherein a frequency domain resource occupied by the first signal is different from a frequency domain resource occupied by the first SSB.

16. The method according to claim 15, wherein the first signal and the first SSB occupy a same slot or different slots.

17. The method according to claim 15 or 16, wherein an offset of the frequency domain resource occupied by the first signal relative to a first frequency domain baseline is predefined or indicated by first indication information carried in the first SSB.

18. The method according to claim 17, wherein the first frequency domain baseline is the frequency domain resource occupied by the first SSB.

19. The method according to any one of claims 15 to 18, wherein the first SSB carries second indication information, the second indication information indicates that the first SSB and the first signal are frequency division multiplexed, the frequency division multiplexing is one of a plurality of multiplexing modes, and the plurality of multiplexing modes comprise time division multiplexing and/or frequency division multiplexing.

20. The method according to any one of claims 15 to 19, wherein a system frame number, a slot number, and a start symbol of the first signal are predefined or indicated by third indication information in the first SSB.

21. The method according to claim 20, wherein the system frame number of the first signal is the same as a system frame number of the first SSB.

22. The method according to claim 21, wherein the slot number of the first signal is the same as a slot number of the first SSB, or the slot number of the first signal = a slot number of the first SSB + n, wherein n is a positive integer and n ≤ a number of slots comprised in one system frame - 1.

23. The method according to claim 20, wherein the system frame number of the first signal = a system frame number of the first SSB + m, wherein m is a number of system frames comprised in one SSB periodicity.

24. The method according to claim 23, wherein the slot number of the first signal = a slot number corresponding to a 1^{st} SSB in a next SSB periodicity.

25. The method according to any one of claims 14 to 24, wherein a demodulation reference signal DMRS corresponding to the first signal is a first DMRS, a DMRS corresponding to a second signal is a second DMRS, the first DMRS and the second DMRS have a same port number, the first DMRS and the second DMRS have a same precoding granularity, and the second signal is a second-type signal, in the plurality of second-type signals, scheduled by using the first signal.

26. The method according to any one of claims 14 to 24, wherein a DMRS corresponding to the first signal and a DMRS corresponding to a second signal are a same DMRS, a time domain resource occupied by the DMRS comprises a first symbol and a second symbol, frequency domain resources occupied by the DMRS on the first symbol and the second symbol are the same or different, and the second signal is a second-type signal, in the plurality of second-type signals, scheduled by using the first signal.

27. A communication apparatus, comprising a module configured to implement the method according to any one of claims 1 to 13, or comprising a module configured to implement the method according to any one of claims 14 to 26.

28. A communication apparatus, comprising a processor and a memory, wherein
the memory is configured to store a computer program; and
the processor is configured to invoke the computer program, to cause the apparatus to implement the method according to any one of claims 1 to 13 or implement the method according to any one of claims 14 to 26.

29. A computer-readable storage medium, wherein the storage medium stores a computer program or instructions, and when the computer program or the instructions are executed by a computer, the method according to any one of claims 1 to 13 or the method according to any one of claims 14 to 26 is implemented.

30. A computer program product, wherein the computer program product comprises instructions, and when the instructions are run by a computer, the method according to any one of claims 1 to 13 or the method according to any one of claims 14 to 26 is implemented.
